Europäisches Patentamt

(19) European Patent Office

Office européen des brevets

(11) EP 0 698 893 A2

(12) **EUROPEAN PATENT APPLICATION**

(43) Date of publication:
28.02.1996 Bulletin 1996/09

(51) Int. Cl.$^6$: **G21B 1/00**

(21) Application number: **95116753.5**

(22) Date of filing: **12.03.1990**

(84) Designated Contracting States:
AT BE CH DE DK ES FR GB IT LI LU NL SE

(30) Priority: 13.03.1989 US 323513
21.03.1989 US 326693
10.04.1989 US 335233
14.04.1989 US 338879
18.04.1989 US 339646
02.05.1989 US 346079
16.05.1989 US 352478

(62) Application number of the earlier application in
accordance with Art. 76 EPC: **90905756.4**

(71) Applicant: **UNIVERSITY OF UTAH RESEARCH
FOUNDATION**
Salt Lake City, Utah 84112 (US)

(72) Inventors:
• **Pons,Stanley**
**Salt Lake City, Utah 89019 (US)**
• **Fleischmann,Martin**
**Tisbury, Wiltshire SP3-6LJ (GB)**

(74) Representative: **Dost, Wolfgang, Dr. rer.nat., Dipl.-
Chem. et al**
**D-81679 München (DE)**

Remarks:
This application was filed on 24 - 10 - 1995 as a
divisional application to the application mentioned
under INID code 60.

(54) **Method and apparatus for power generation**

(57) The present invention involves an apparatus and method for generating energy, neutrons, tritium or heat as a specific form of energy. The apparatus comprises a material such as a metal having a lattice structure capable of accumulating isotopic hydrogen atoms and means for accumulating isotopic hydrogen atoms in the metal to a chemical potential sufficient to induce the generation of the specified items.

The sufficient chemical potential is, for example, enough to induce generation of an amount of heat greater than a joule-heat equivalent used in accumulating the isotopic hydrogen atoms in the lattice structure to the desired chemical potential.

FIG.1-3

Printed by Rank Xerox (UK) Business Services
2.9.9/3.4

## Description

The present invention is a continuation-in-part of co-pending U.S. patent applications for: "Heat-Generating Method and Apparatus", Serial No. 323,513, filed March 13, 1989; "Neutron-Beam Method and Apparatus", Serial No. 326,693, filed March 21, 1989; "Heat Generating Method and Apparatus", Serial No. 335,233, filed April 10, 1989; "Heat Generating Method and Apparatus", Serial No. 338,879, filed April 14, 1989; "Power Generating Method and Apparatus", Serial No. 339,646, filed April 18, 1989; "Power Generating Method and Apparatus", Serial No. 346,079, filed May 2, 1989; and "Power Generating Method and Apparatus", Serial No. 352,478, filed May 16, 1989, which are incorporated herein by reference.

The present invention relates to methods and apparatuses for generating heat, neutrons, tritium or electrical power, and in one illustration, to an apparatus which utilizes heat produced by compressing low atomic weight nuclei in a metal lattice under conditions which produce excess heat, possibly involving nuclear fusion.

An ideal energy source, and one which has been the subject of intensive scientific investigation and search over at least the past thirty years, would have the following properties:

(a) the source would utilize deuterium, which is available in a virtually inexhaustible amount from the oceans;

(b) The source would produce relatively benign and short-lived reaction products;

(c) The source would produce substantially more energy, e.g. in the form of heat, than the energy input into the system; and

(d) The source could be constructed on a relatively small, even portable scale.

Heretofore, no one energy source has come close to achieving these ideals. The possibility of converting deuterium to energy via nuclear fusion reactions in a dense plasma, using either magnetic containment or inertial confinement to achieve the necessary plasma density, temperature, and confinement time needed for controlled plasma fusion, has been the subject of an intensive worldwide scientific effort. Despite this, the possibility of achieving controlled nuclear fusion in a high-temperature plasma appears to be years away. (See, for example, Technology Assessment Report)[1].[1]

In an alternative fusion approach, known as muon-catalyzed fusion, muons are used to "shield" the electric charge of nuclei (muons bind tightly to the hydrogen nucleus and neutralize its positive charge). The nuclei are drawn close together because of the heavy mass of the muon, so fusion by tunneling can occur at a relatively low temperature. Thus many of the problems of high temperature plasma containment which have limited the success of the high-temperature plasma approach are avoided. However, due to the low numbers of fusion events during the lifetime of any given muon, it is unclear at this date whether the method can ever be developed to support a self-sustaining reaction.

The present invention involves an apparatus and method for generating energy, neutrons, tritium and/or heat as a specific form of energy. The apparatus comprises a material such as a metal having a lattice structure capable of accumulating isotopic hydrogen atoms and means for accumulating isotopic hydrogen atoms in the metal to a chemical potential sufficient to induce the generation of one or more forms of the previously noted energy.

The sufficient chemical potential is, for example, enough to induce generation of an amount of heat greater than a joule-heat equivalent used in accumulating the isotopic hydrogen atoms in the lattice structure to the desired chemical potential.

A preferred metal is one of group VIII or group IVA, palladium being most preferred. Other preferred metals include iron, cobalt, nickel, ruthenium, rhodium, osmium, iridium, titanium, zirconium, hafnium or alloys thereof.

During the operation of the apparatus of the invention, the charged lattice emits occasional bursts of neutrons, and/or undergoes short-duration periods of exceptional heat output. These observations suggest that heat-generating fusion events occurring within the lattice may include nuclear chain reactions which may be stimulated by high-energy particles or rays within or applied to the lattice (such as are generated by fusion or other nuclear reactions occurring within the lattice). Therefore, one aspect of the present invention involves stimulating or enhancing nuclear reactions in the lattice by exciting or bombarding the charged lattice with high energy rays or particles such as rays, $\alpha$ or $\beta$ particles, high energy or thermalized neutrons, or high energy protons.

In an important embodiment, the apparatus includes a fluid comprising an isotopic hydrogen atom source, and means for producing isotopic hydrogen atoms from said source to accumulate in the metal lattice. A preferred isotopic hydrogen source is deuterated water. The fluid may be an aqueous solution comprising at least one water-miscible isotopic hydrogen solvent component, the metal is at least partially submerged in the aqueous solution, and the means for accumulating includes a charge-generating source for electrolytically decomposing the solvent component into adsorbed isotopic hydrogen atoms, with accumulation of the adsorbed isotopic hydrogen atoms in the metal lattice.

[1] A listing of references for the reference numerals in this section are found at the end of Section I.

The apparatus of the present invention may be used for generating electricity by use of heat produced as well known to those skilled in electricity generation. Means for transforming heat produced in said lattice structure to electrical energy include electrical generators such as steam turbines, semiconductor thermoelectric devices and thermionic emitters.

A thermal neutron beam may also be generated by such an apparatus. This would involve a reactor comprising a metal having a crystal lattice structure capable of accumulating isotopic hydrogen atoms and which has isotopic hydrogen atoms accumulated in its lattice structure to a chemical potential sufficient to induce neutron-generating events, as evidenced by the production of thermal neutrons, said chemical potential being at least about 0.5 eV when compared to a chemical potential of isotopic hydrogen atoms in the metal lattice equilibrated with the isotopic hydrogen at standard pressure; and means such as a divergent neutron collimator, for example, for collimating at least a portion of the thermal neutrons produced in the reactor into a thermal neutron beam. Thermal neutron radiography of a target material may also be performed, using recording means positioned to receive neutrons which pass through target material in the thermal neutron beam. Recording means includes a convertor to capture neutrons and emit capture-dependent radiation, and a film sensitive to said radiation. Neutron capture gamma-ray spectroscopy of a target material, may also be used by including means for measuring gamma-ray spectra produced upon neutron capture by the material. Neutron scattering analysis of a target material, which includes a neutron detector for measuring distribution of scattered neutrons at angles different from that of the beam directed as to the target material is also an aspect of the present invention.

The apparatus of the present invention may be in an arrangement where said metal is formed as a series of stacked membranes in an electrolytic cell, where pairs of membranes partition the cell into a series of closed electrolytic compartments.

Where the charge-generating source is electrolytic, the metal is a cathode and the electrolytic decomposing is carried out preferably at a current of 2-2000 mA cm$^{-2}$ of cathode surface area, although higher current levels up to about 10,000 mA cm$^{-2}$ and even higher can be used in certain applications.

In certain embodiments the fluid with the isotopic hydrogen atom source may comprise a catalytic poison effective to block catalytic evolution of gases consisting of hydrogen isotopes. The fluid may also comprise lithium deuteroxide and/or lithium sulfate. The lithium sulfate may be about 0.1 M to about 1.0 M lithium sulfate.

The isotopic hydrogen atom source may also be one or more fused metal isotopic hydrides. Means for producing accumulation then including forming an intimate mixture of the material or metal in particulate form and the fused metal hydride, and heating the mixture to promote migration of isotopic hydrogen atoms from the source into the particles of metal, and cooling said mixture when a chemical potential of isotopic hydrogen atoms in the metal lattice of at least about 0.5 eV is reached. In this embodiment a preferred combination is with a metal of palladium, nickel, iron, cobalt or alloys thereof and source of isotopic hydrogen atoms is fused lithium deuteride, sodium deuteride, potassium deuteride or mixtures thereof. Preferred methods of heating the particulate metal system includes heating the mixture with a high energy heat source under conditions which produce the chemical potential of at least about 0.5 eV in less than about 1 μ second.

The preferred apparatus of the present invention, in one operable form, includes an isotopic hydrogen atom source such as deuterated water, ordinary water, or tritiated water.

In certain embodiments preferred metals include palladium, rhodium, ruthenium, iridium, cobalt, titanium, zirconium or alloys containing fermionic isotopes of these metals. The metal of the present apparatus may also be a composite of a substrate selected from the group consisting of palladium, rhodium, ruthenium, iridium, osmium, nickel, cobalt, iron, zirconium, titanium, platinum, hafnium, and alloys thereof, and a thin metal film upon said substrate of palladium, rhodium, ruthenium, iridium, zirconium, or alloys thereof. Alternatively, the metal may be a thin film layered on a composite of a substrate unable to accumulate isotopic hydrogen atoms to an extent inducing fusion reactions. Such a thin metal film has a preferred thickness of about 50-500 Å, although thicker films might be suitable.

Means for transforming heat to electricity include a steam-powered turbine or an electrical generator, and a heat transfer system for transferring heat from the heat source to a turbine or electrical generator. This means for transforming may also be a semiconductor thermoelectric device or utilize a thermionic emitter device.

The present invention also includes methods of generating heat and neutrons, as well as producing electricity or performing work. These methods comprise the steps of: (a) contacting a material (preferably a group VIII or IV A metal) having a lattice structure capable of accumulating isotopic hydrogen atoms, with a fluid comprising an isotopic hydrogen atom source; and (b) inducing accumulation of isotopic hydrogen atoms in the lattice structure to achieve a concentration therein sufficient to cause heat or neutron generation. The achieved concentration of isotopic hydrogen atoms may be characterized by having a chemical potential of at least about 0.5 eV. The isotopic hydrogen atom source is at least one of water, deuterated water and tritiated water. In one preferred embodiment step (b) involves electrochemical decomposition of the isotopic hydrogen atom source and electrolytic compression of isotopic hydrogen atoms into the lattice structure.

Reaction byproducts, which can include tritium and/or tritiated gas, tritiated water and helium, can be recovered by known processes for commercial use, as well as neutron emissions which may be used for a variety of purposes.

As a method of producing electricity, the method further comprises utilizing generated heat to generate electricity by various well-known means. As a method of performing work, the method further comprises utilizing generated heat to perform work, such as by use of a Stirling engine, for example.

Step (b) of these methods involve energy input conditions to induce isotopic hydrogen atom accumulation. The energy-input conditions most preferably involve electrolysis with the material acting as a cathode. The material is preferably a metal and the electrolysis is carried out at a current of between about 2 and about 2000 mA cm$^{-2}$ cathode surface area, or even at high current density levels, as indicated previously. In a preferred embodiment, the material in the apparatus or method of the present invention is a metal which has been treated to remove surface and near-surface impurities which may inhibit capability of the metal to accumulate isotopic hydrogen atoms. The metal may also be degassed to remove at least a portion of any previously absorbed hydrogen atoms. The treating includes surface machining of the metal segment to remove a superficial portion thereof and the surface machining may be followed by an abrasion step to remove machining residue. The degassing preferably involves one or both of heating and exposure to at least a partial vacuum.

As a method for producing a neutron beam the above method includes the additional step of: (c) forming generated neutrons into a neutron beam. As a method of neutron-beam analysis of a target material this method comprises the steps of: (d) collimating at least a portion of neutrons produced by the reactor to form a neutron beam; (e) directing the neutron beam at the target material; and (f) measuring physical events which are produced by directing the beam onto the material.

Figure I-1A shows a cubic face-centered crystal structure in the lattice of a metal, such as palladium, used in the present invention;

Figure I-1B shows the expanded beta form of the lattice, and diffusion of an isotopic hydrogen atom into the lattice;

Figure I-2 schematically shows one embodiment of an electrolytic cell for compressing isotopic hydrogen nuclei into the lattice of a metal rod;

Figure I-3 schematically shows an embodiment of an electrolytic cell having a bipolar cell stack in a cell-pressed configuration, for compressing isotopic hydrogen nuclei, such as deuterons, into the lattice of a metal;

Figure I-4 schematically illustrates an alternate method for achieving electrolytic compression of isotopic hydrogen atoms in a metal lattice;

Figure I-5 schematically illustrates a thin-film palladium electrode constructed for use in the invention;

Figure I-6 schematically illustrates a palladium coated electrode constructed for use in the invention;

Figure I-7 shows the spectrum, in counts per minute, of β-ray disintegrations from a heavy water sample taken from an apparatus like the one shown in Figure I-2;

Figure I-8 is a schematic view of a steam driven generator, which is an exemplary embodiment of but one way to utilize the energy that is derived from the present invention.

Figure I-9 schematically illustrates a system for recovering tritium.

Figure II-5 is a cross-sectional, schematic view of a neutron-beam generator constructed according to one embodiment of the invention;

Figure II-6 is a schematic view of a neutron-beam apparatus designed for neutron radiography, according to one embodiment of the invention;

Figure II-7 is a schematic view of a neutron-beam apparatus designed for neutron scattering or diffraction analysis, according to another embodiment of the invention; and

Figure II-8 is a schematic view of a neutron-beam apparatus designed for neutron capture gamma-ray spectroscopy, according to another embodiment of the invention;

Figure III-1 shows a single compartment vacuum Dewar calorimeter cell.

Figure III-2A shows a schematic of feedback circuit for protection against galvanostat oscillations.

Figure III-2B shows a schematic of circuit for high stabilization of a regulated power supply used as a high output current galvanostat.

Figure III-3A shows the temperature above bath vs. time (upper) and cell potential vs. time data (lower) for a 0.4 x 10 cm Pd rod in 0.1$\underline{M}$ LiOD solution. The applied current was 800 mA, the bath temperature was 29.87°C, and the estimated $Q_f$ was 0.158 W. The time of the measurement (taken at the end of the calibration pulse) was approximately 0.45 x $10^6$s after the beginning of the experiment.

Figure III-3B is the same as Figure III-3A except time of measurement approximately 0.89 x $10^6$s. Estimated $Q_f$ = 0.178 W.

Figure III-3C is the same as Figure III-3A except time of measurement approximately 1.32 x $^6$s. Estimated $Q_f$ = 0.372 W.

Figure III-4A shows the temperature above bath vs. time (upper) and cell potential vs. time data (lower) for a 0.2 x 10 cm Pd rod in 0.1 $\underline{M}$ LiOD solution. The applied current was 800 mA, the bath temperature was 29.90°C, and the estimated $Q_f$ was 0.736 W. The time of the measurement (taken at the end of the calibration pulse) was approximately 0.28 x $10^6$s after the beginning of the experiment.

Figure III-4B is the same as Figure III-4A except time of measurement approximately 0.54 x $10^6$s. Estimated $Q_f$ = 0.888W.

Figure III-4C is the same as Figure III-4A except time of measurement approximately 1.32 x $10^6$s. Estimated $Q_f$ = 1.534 W.

Figure III-5A shows cell temperature vs. time (upper) and cell potential vs. time (lower) plots for a 0.4 x 1.25 cm Pd rod electrode in 0.1$\underline{M}$ LiOD solution. Current density 64 mA cm$^{-2}$, bath temperature 29.87°C.

Figure III-5B shows cell temperature vs. time (upper) and cell potential vs. time (lower) plots for a 0.4 x 1.25 cm Pd rod electrode in 0.1$\underline{M}$ LiOD solution. Current density 64 mA cm$^{-2}$, bath temperature 29.87°C. This is a different cell than that shown in Figure III-5A.

Figure III-6A shows the rate of excess enthalpy generation as a function of time for the cell in Figure III-5A.

Figure III-6B shows the rate of excess enthalpy generation as a function of time for the cell in Figure III-5B.

Figure III-7A shows total specific excess energy output as a function of time for the cell in Figure III-5A.

Figure III-7B illustrates total specific excess energy output as a function of time for the cell in Figure III-5B.

Figure III-8 shows the cell temperature vs. time plot for a 0.4 x 1.25 cm Pd electrode in 0.1$\underline{M}$ LiOD for a period during which the cell went to boiling.

Figure III-9 is a Log-log plot (excess enthalpy vs. current density) of the data in Tables III-3 and III-A6.1.

According to one aspect of the invention, it has been discovered that isotopic hydrogen atoms, such as and preferably deuterium atoms, when accumulated in the lattice of metals which are capable of dissolving hydrogen, can achieve a compression and mobility in the lattice which are sufficient to produce heat-generating events within the metal lattice which are believed to be fusion-related, as evidenced both by the amount and duration of heat released from the lattice, and by the generation of nuclear fusion products. These heat-generating events may be associated with neutron and tritium production, and perhaps other nuclear reaction products.

Section I describes materials and conditions suitable for achieving the required conditions for heat-generating or neutron-producing events within a metal lattice.

Section II describes the generation and use of neutrons according to the present invention.

Section III describes a detailed analysis of conditions and events relating to heat and neutron production according to the present invention.

## SECTION I

### Heat-Generating Conditions Within a Metal Lattice

A. Metal Lattice

Metals and metal alloys which are suitable for use in the present invention are those which are capable of dissolving hydrogen in the metal lattice, such as by (i) electrolytic decomposition of hydrogen into atomic hydrogen, (ii) adsorption of the atomic hydrogen on the lattice surface, and (iii) diffusion of the atoms into the lattice.

The metal is also preferably capable of maintaining its structural integrity when isotopic hydrogen atoms are compressed into the metal lattice at high concentrations, e.g., near hydride saturation. That is, the metal lattice should be capable of swelling without cracking as an increasing concentration of isotopic hydrogen atoms are accumulated and compressed into the lattice.

The ability to take up hydrogen atoms by diffusion has been examined in a large number of metals (which are defined herein to include associated metal alloys and metal doped with selected impurities). See, for example, Mueller et al.[2], Ron et al.[3], Veziroglu[4], Dandapani et al.[5], and Bambakadis[6]. Of these, the group VIII metals, and particularly palladium, rhodium, ruthenium, iridium, osmium, nickel, cobalt, iron, and alloys thereof, such as palladium/silver and palladium/cerium alloys, are favored, as are the group IVA metals titanium, zirconium, and hafnium.

The group VIII metals have cubic face-centered lattice structures as illustrated in Figure I-1A. With diffusion of isotopic hydrogen atoms into the lattice, the lattice is able to adopt an expanded beta form which accommodates a high concentration of diffused atoms into the lattice, and effectively prevents localized strain and cracking.

One possible mechanism for the nuclear-fusion events which are believed to occur within a metal lattice charged with isotopic hydrogen involves a correlation between the valence electrons in the metal lattice and pairs of isotopic hydrogen which allows the hydrogen-atom pairs to become more localized and therefore more likely to fuse. Fusion occurring according to this mechanism may be favored by fermionic metals, i.e., metals characterized by n(1/2) spin states. Exemplary fermionic metals would include titanium isotopes $^{22}Ti_{47}$, and $^{22}Ti_{49}$ (together making up about 13% of the naturally occurring Ti nuclides), $^{46}Pd_{105}$ (making up about 22 percent of the naturally occurring Pd nuclides), $^{27}Co_{59}$ (making up 100% of naturally occurring Co nuclides), $^{44}Ru_{99}$ and $^{44}Ru_{101}$ (together making up about 30% of the naturally occurring nuclides), $^{45}Rh_{103}$ (making up 100% of naturally occurring Rh nuclides), $^{77}Ir_{193}$ (making up about 63% of the naturally occurring Ir nuclides), and $^{78}Pt_{195}$ (making up about 33.8% of the naturally occurring Pt nuclides).

Naturally occurring palladium may be particularly favorable, since the $^{46}Pd_{105}$ isotope has a relatively large neutron cross section compared with other major isotopes present in naturally occurring Pd. Naturally occurring rhodium is also expected to provide a highly favorable lattice.

As will be appreciated below, the metal lattice should also have (or be treated to have) surface properties which are favorable to charging with isotopic hydrogen atoms. Where the metal is charged by electrochemical decomposition of isotopic hydrogen water, as described below, the surface should favor the electrolytic formation of atomic isotopic hydrogen at the lattice surface, and also favor efficient absorption of the atomic isotopic hydrogen into the lattice. The latter requirement will be defeated in certain metals, such as platinum, whose surface efficiently catalyses conversion of atomic isotopic hydrogen to molecular gas, at the expense of absorption into the lattice.

For this reason, and as will be readily appreciated by those of skill in the art, metals such as platinum, which otherwise might provide a favorable metal lattice environment for isotopic hydrogen fusion, may be unsuitable. As will be discussed below, the problem of molecular hydrogen gas formation at the lattice surface can be minimized by the use of catalytic poisons, thus making usable otherwise potentially unusable metals.

Impurities, such as platinum, in a bulk-phase metal, such as palladium, may also inhibit isotopic hydrogen atom charging of the lattice, by promoting molecular gas formation at the expense of hydrogen atom absorption. In this regard, it is known that many metal impurities tend to migrate to the surface of a metal when heated to melt temperature for casting or annealing. For this reason, metals such as palladium which have been formed by casting or annealing may have significant platinum impurities at their surface regions, and may therefore show relatively poor charging efficiency. Conversely, a solid lattice formed by casting or annealing, followed by machining or the like to remove outer surface regions would have relatively low surface impurities. The machined lattice may be further treated, such as with abrasives, to remove possible surface contaminants from the machining process. Such methods for reducing impurities in a metal lattice are known.

As will be seen from below, a feature which is believed to be important in the invention is charging a metal lattice to a high accumulation of isotopic hydrogen atoms, particularly deuterium. In metals such as palladium which are known to undergo significant hydriding (with ordinary hydrogen) over time (e.g., Veziroglu[4], Ron et al.[3], Mueller et al.[2]), it is therefore desirable to remove at least a portion of the ordinary hydrogen present in the lattice prior to charging, since this preexisting hydrogen may limit the available hydride sites in the lattice. Most preferably, all of the hydrogen should be removed. Methods for removing or desorbing hydrogen from a metal lattice, such as by melting and cooling, or vacuum degassing are known.

Figure I-1B illustrates a Pd-D (palladium-deuterium) lattice, showing deuterium nuclei moving freely into and out of a cell. Although the correct description of the palladium/isotopic hydrogen atom system is still uncertain, experiments performed in support of the present invention, in conjunction with subsequent experiments reported by others, indicate the following features:

1. The isotopic hydrogen atoms are highly mobile, with a diffusion coefficient for deuterium, $D_d$, of about $10^{-7}$ $cm^{-2}s$ at about 100° K. This feature has been deduced in part from the measured electrolytic separation factor S for hydrogen and deuterium, which shows that S varies with potential and approaches a limiting value of 9.5, indicating that the atomic species in the lattice are so loosely bound as to behave as three-dimensional classical vibrators.

2. The isotopic hydrogen atoms exist as nuclei, e.g., deuterons (D+) in the lattice, as evidenced by migration of the nuclei in an electric field. The electron from each isotopic hydrogen nuclei is presumed to be delocalized in the band structure of the metal lattice.

3. It is possible to accumulate enough isotopic hydrogen atoms in the lattice to raise the chemical potential of the lattice to above 0.5 eV, and perhaps as high as 2 eV or more above the chemical potential of the metal equilibrated with the isotopic hydrogen atoms at standard pressure (i.e., without input of energy).

4. Although the repulsive potential of the isotopic hydrogen nuclei is shielded to some extent by electrons in the metal lattice, it is unlikely that molecular isotopic hydrogen, e.g., $D_2$, is formed, due to the weak S-character of the electronic wavefunctions. Further, formation of hydrogen-isotope gas in the lattice has not been observed.

The metal should be a solid form, i.e., in the form of a solid rod, sheet, or the like, when the lattice is to be charged by electrolysis, as described in Section IB below. Alternatively, the metal may be in thin-film form, as described in Section IE below, or in powdered or small particle form, such as when the lattice is to be charged by heating in the presence of metal hydrides as described in Section ID. The anode should be uniformly spaced from the cathode in any of these configurations in order to achieve uniform charging.

B. Electrolytic Compression

Figure I-2 shows an electrolytic cell or system 10 for electrolytically charging a metal lattice with isotopic hydrogen atoms. As defined herein, "charging" means concentrating isotopic hydrogen atoms into a metal lattice. The charging process is also described as "compressing" isotopic hydrogen atoms into the lattice or accumulating said atoms therein. As will be seen, the charging or concentrating process must be capable of concentrating isotopic hydrogen atoms into the lattice to a concentration significantly above the concentration of the hydrogen atoms in a metal hydride equilibrated at standard pressure (1 Bar at 273°K).

In the electrolytic charging process illustrated in Figure I-2, an aqueous solution of isotopic hydrogen water is electrolytically decomposed to form isotopic hydrogen atoms, including (designated $^1_1H$, or H), deuterium atoms (designated $^2_1H$ or $^2D$ or D), and tritium atoms (designated $^3_1H$ or $^3T$ or T), and preferably deuterium alone or in combination with ordinary hydrogen and/or tritium. The invention also contemplates loading of lithium atoms into the lattice, either alone or preferably in combination with isotopic hydrogen atoms, to achieve nuclear fusion reactions involving lithium nuclei, such as neutron interactions with lithium nuclei within the lattice to produce tritium. Suitable sources of lithium for charging are given below.

The component which is decomposed to produce the isotopic hydrogen atoms is also referred to herein as the isotopic hydrogen atom source. One preferred source is an electrolyte solution of deuterated water, or an electrolyte solution of deuterated water containing ordinary water and/or tritiated water, containing an electrolyte such as LiOD or $Li_2SO_4$, for example. A variety of isotopic hydrogen aqueous sources, such as deuterated and or tritiated acids, $D_2SO_4$ for example, and deuterated or tritiated bases, such as NaOD or LiOD, capable of electrolytic decomposition to form the corresponding isotopic hydrogen atoms are suitable.

The electrolytic source preferably includes heavy ordinary water to heavy water at a ratio of between about 0.5% ordinary water to 99.5% deuterium and/or tritiated water.

Alternatively, the source of isotopic hydrogen may be ordinary water, deuterated water, tritiated water, or any combination of the three in molar rations such that the ration of ordinary hydrogen nuclei (protons) in the lattice to the total deuterium nuclei (deuterons) and/or tritium nuclei (tritons) is preferably between about 5:1 to 1:5.

A variety of non-aqueous solvents may also provide suitable sources of the isotopic hydrogen atoms. These solvents may include isotopic hydrogen atom sources such as deuterated and/or tritiated alcohols, acetonitrile, other nitriles, formamide, other amides, furans, pyroles, pyridine(s), metal ions, anions, single ring aromatics, alkenes, alkanes, polynuclear aromatics, heterocycles (S,N,O function) and other compounds which can undergo reductive decomposition to yield isotopic hydrogen atoms such as hydrogen sulfide and other sulfides. The solvents may be diluted or suspended in an aqueous medium containing either non-isotopic or isotopic water and other solute components as mentioned above.

The source fluid may also include a solute component which functions to poison the catalytic surface of the cathode, to prevent reaction of surface bound isotopic hydrogen atoms with isotopic water, to form molecular isotopic hydrogen gas. A variety of compounds which are effective to inhibit the catalytic formation of molecular hydrogen on a metal surface are well known. These include a number of sulfur-containing compounds, such as thiourea or hydrogen sulfide, as well as cyanide salts and the like and are added to the fluid in amounts effective to preferentially inhibit molecular gas formation on the lattice surface during electrolysis. Concentrations of catalytic poisons which are effective in electrolyte solutions are known. Components to enhance electrolytic activity such as lithium sulfate may also be added.

The system may further include a non-submerged heating or catalytic element (not shown) which can be heated to promote catalytic recombination of molecular isotopic hydrogen, such as $D_2$ (formed at the cathode) and $O_2$ (formed at the anode) to regenerate isotopic water. It is additionally possible to have a submerged catalytic anode to serve this same purpose, particularly when the system is infused with deuterium gas ($D_2$).

As shown in Figure I-2, the aqueous source of isotopic hydrogen is in a container 14, which is preferably sealed, to recapture material, such as molecular isotopic hydrogen, which may be generated during electrolysis. The cathode or negative electrode in the system is formed by a metal rod 16 whose lattice is to be charged with isotopic hydrogen atoms. As indicated above, the cathode may be a block in the form of a plate, rod, tube, rolled or planar sheet, or the like, or an electrode having a thin-film metal lattice, as detailed in Section ID. As will be appreciated below, the shape and volume of the cathode will determine the amount of heat which can be generated in the metal, at a given electrical potential.

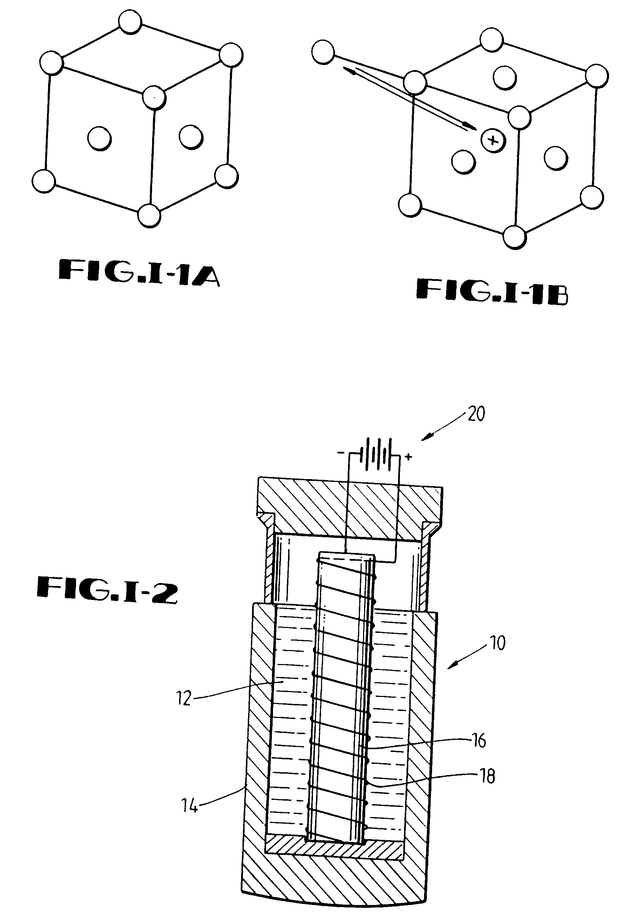

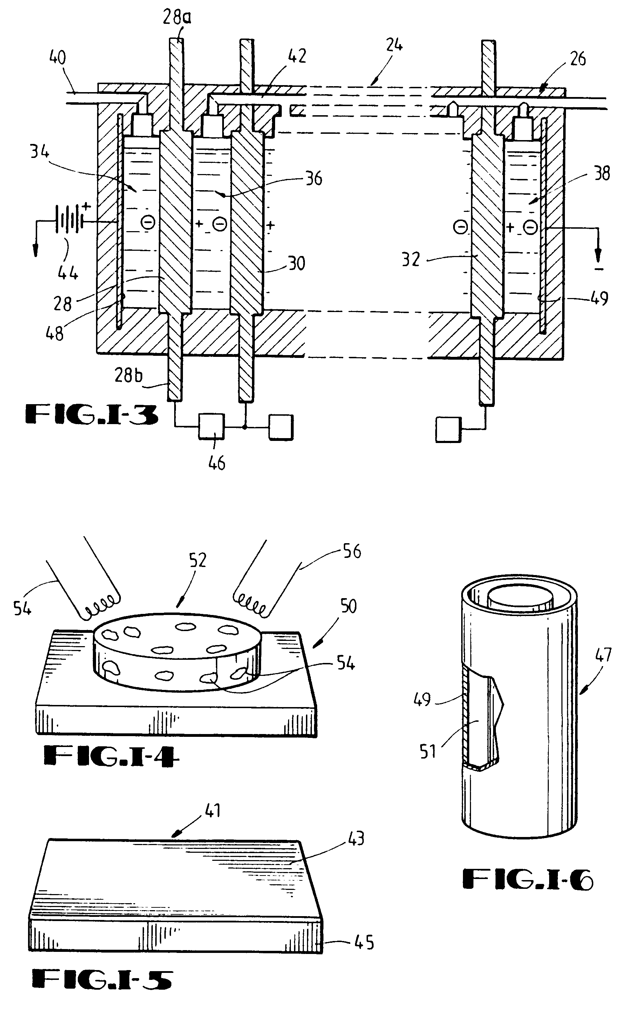

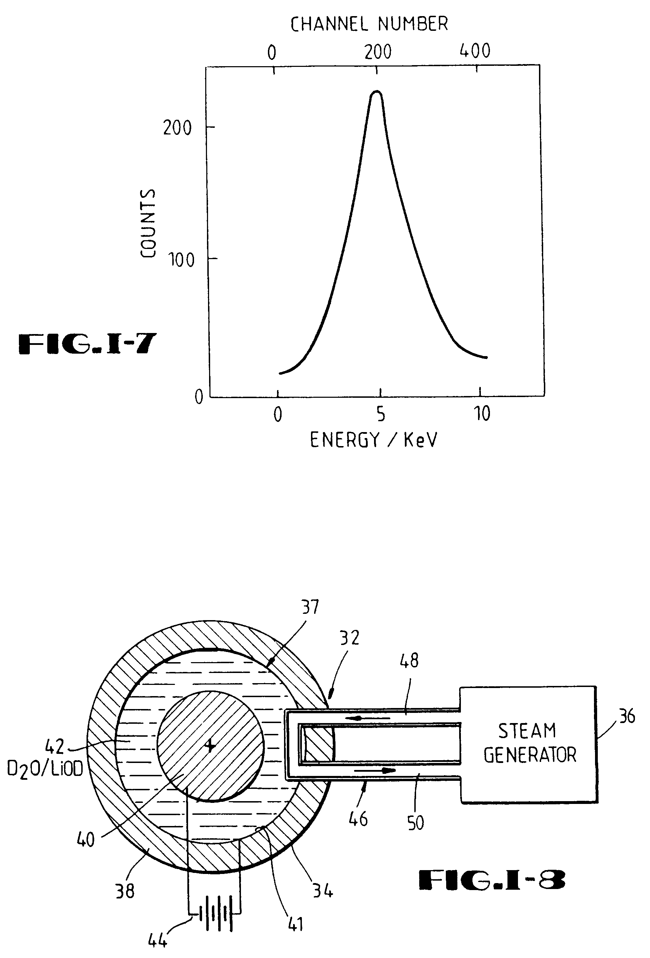

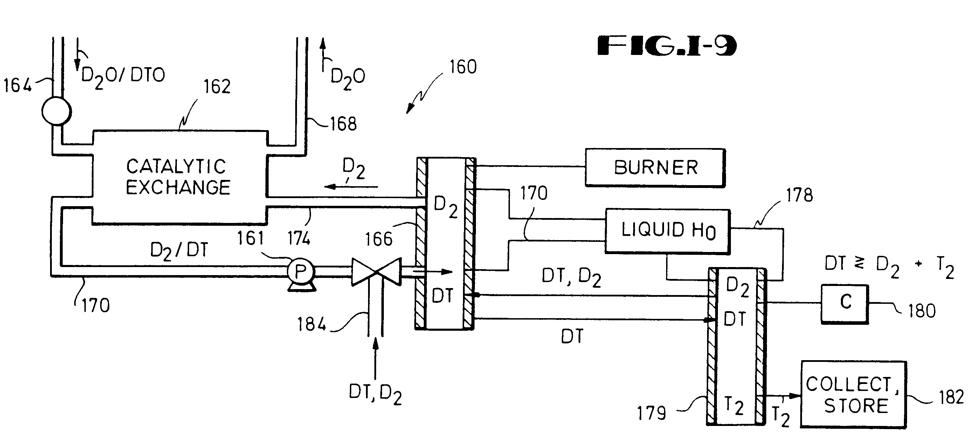

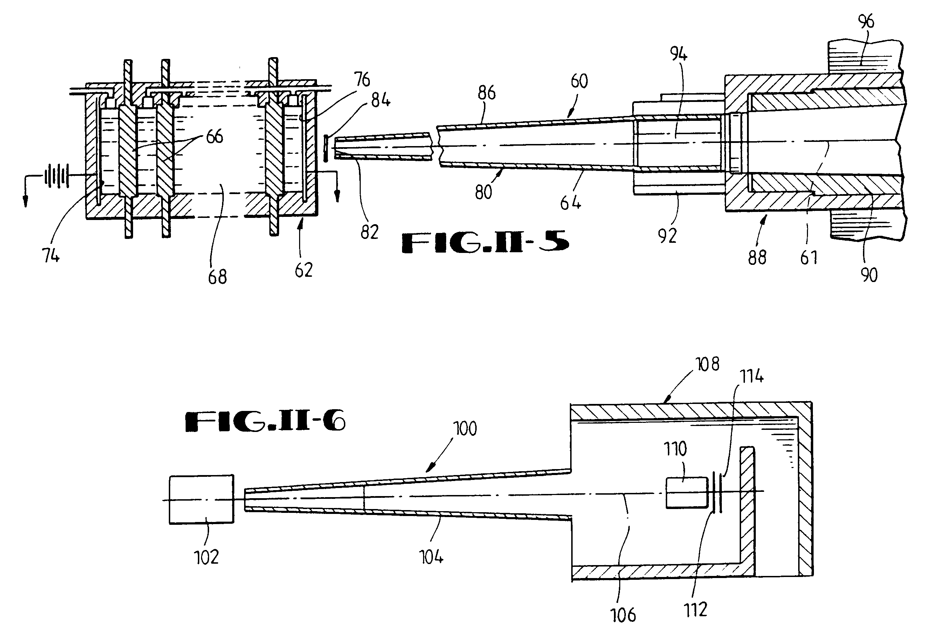

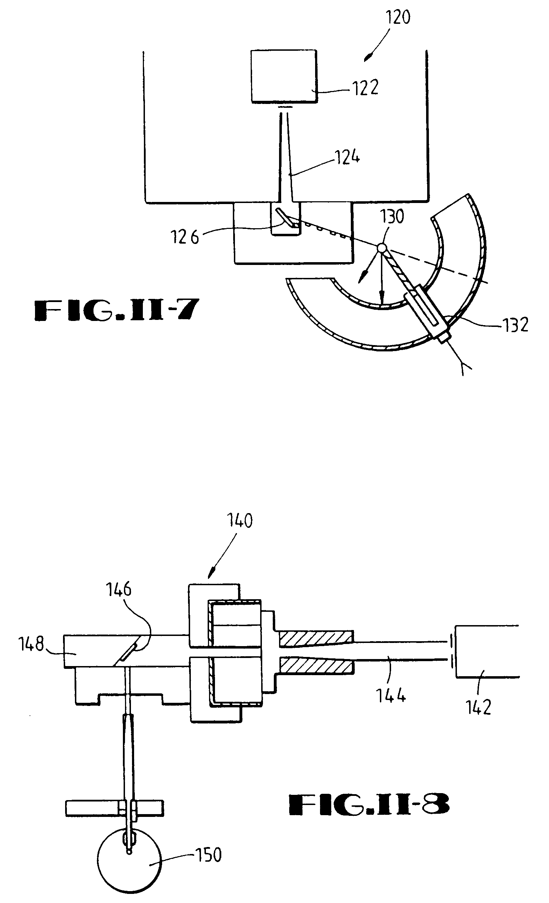

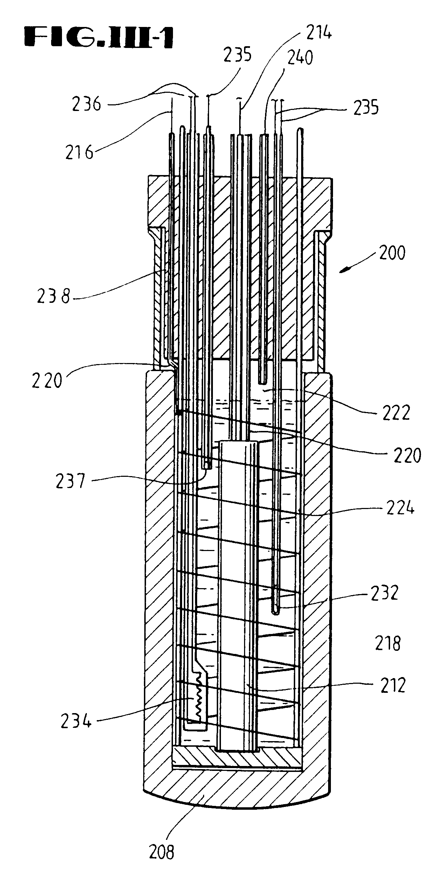

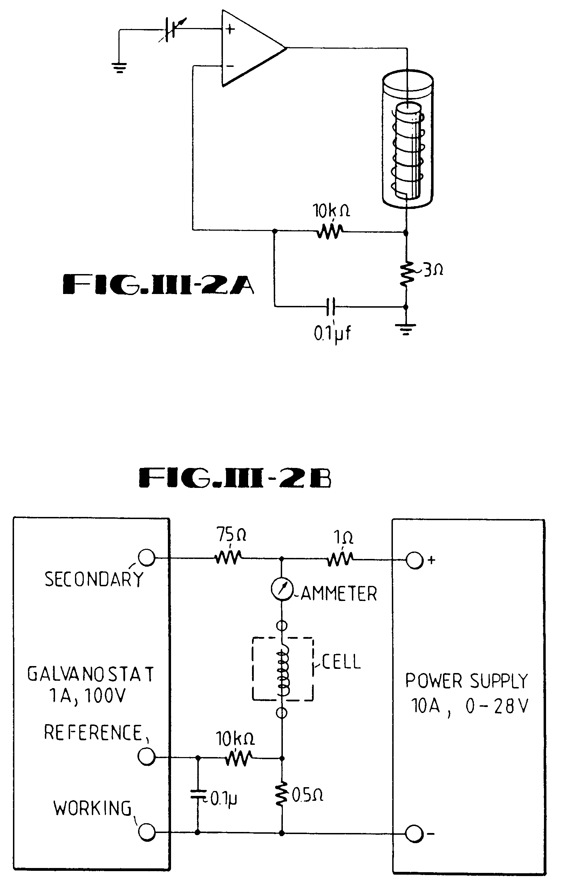

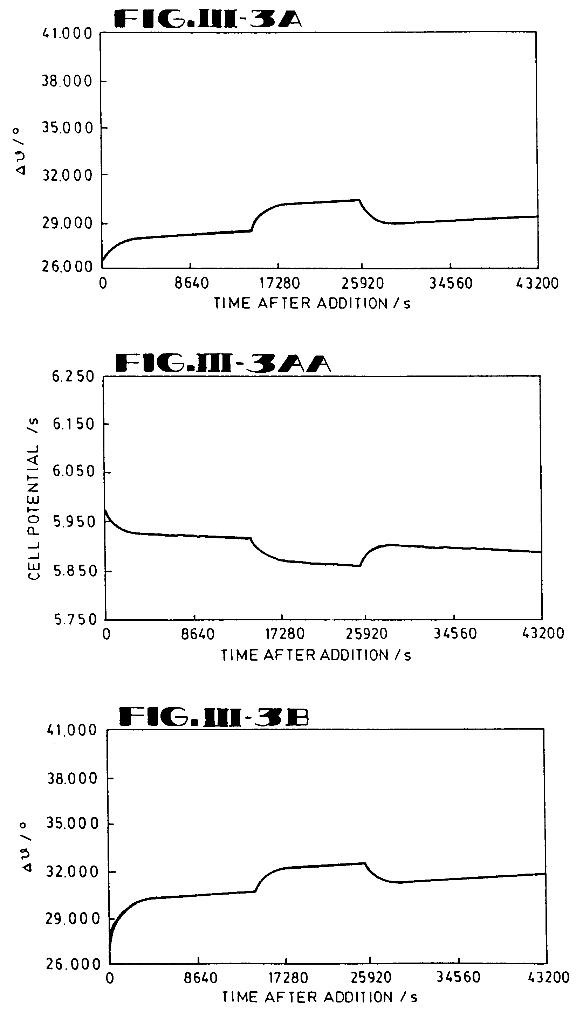

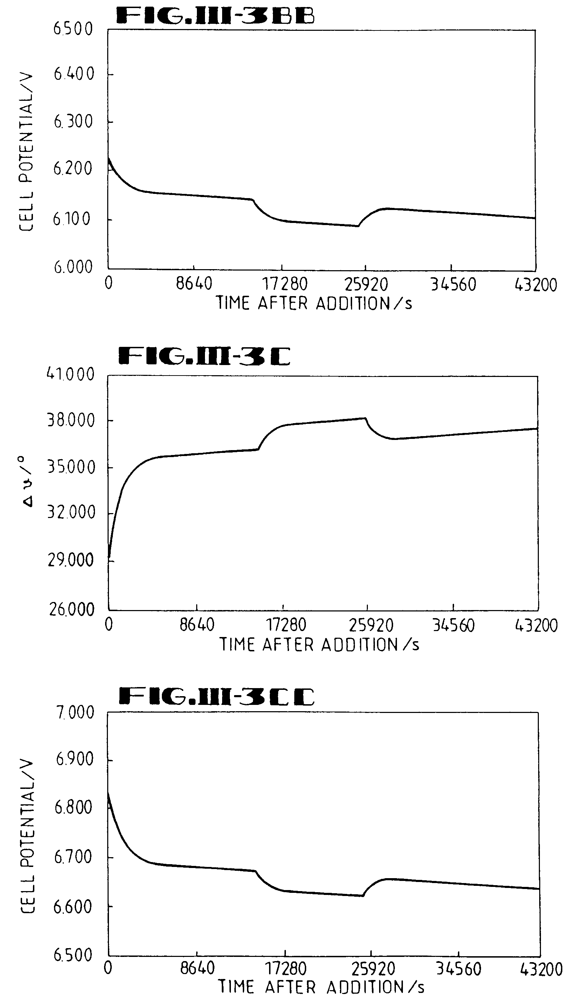

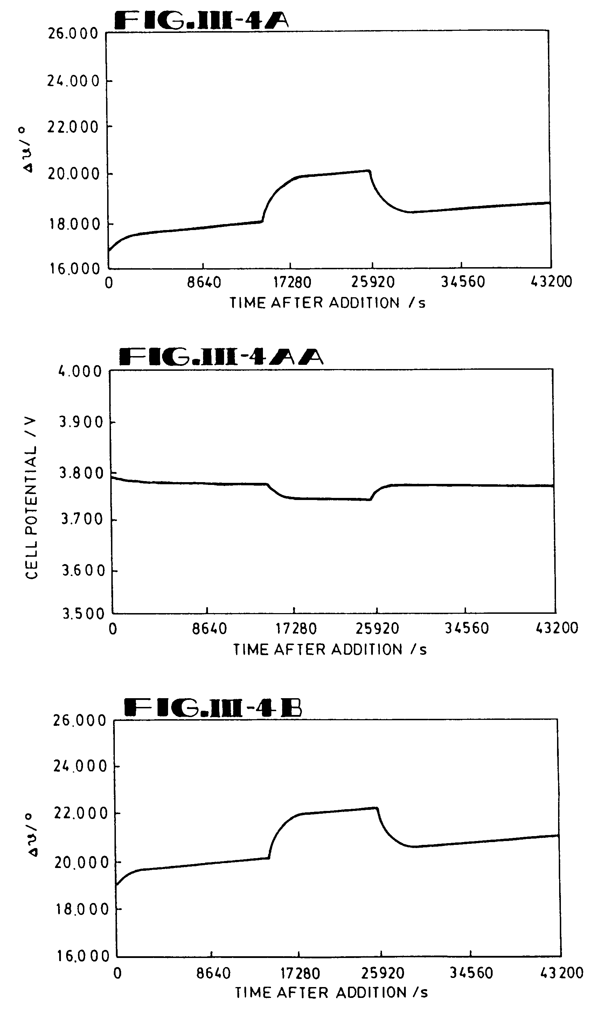

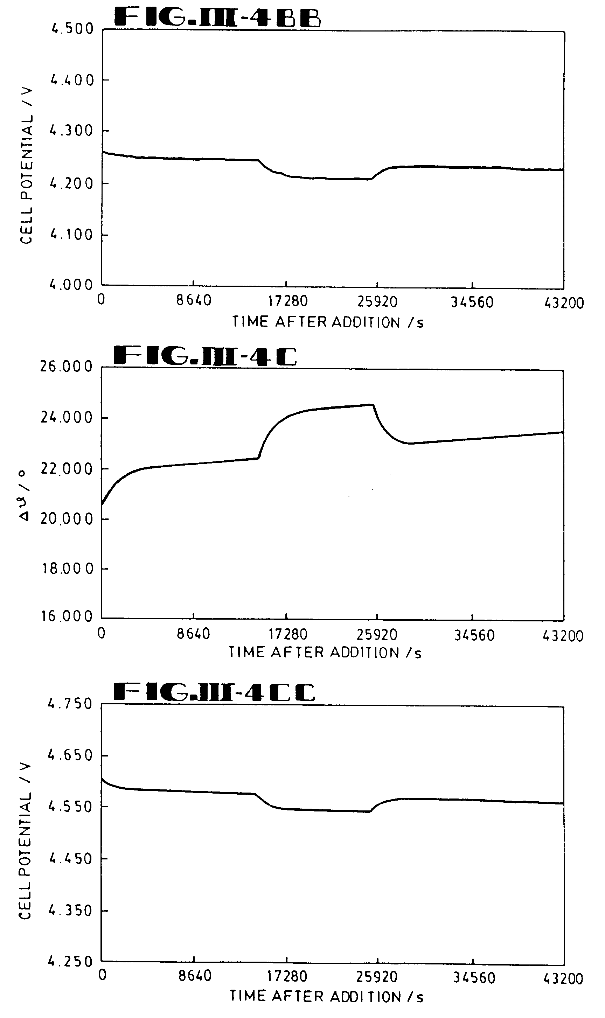

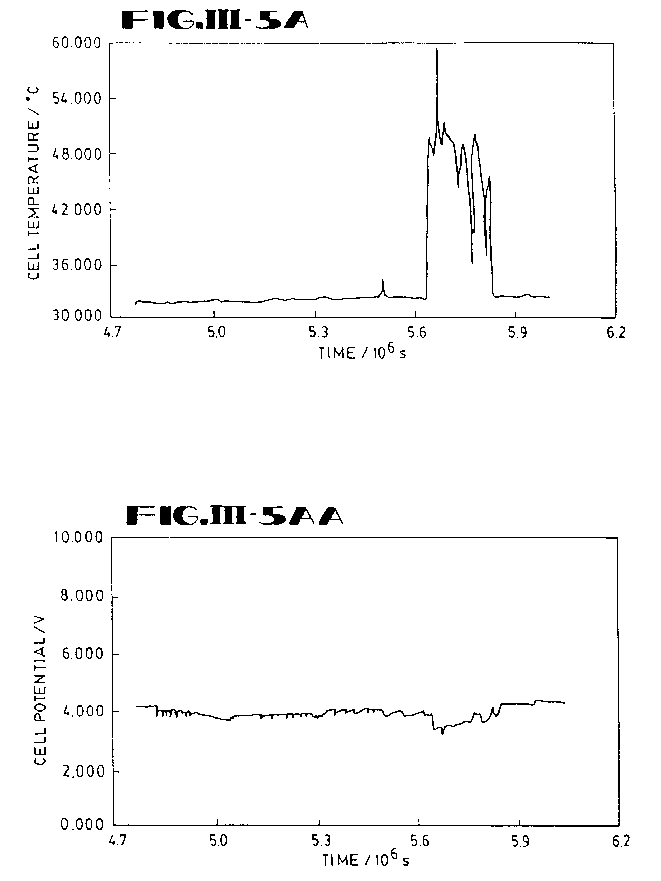

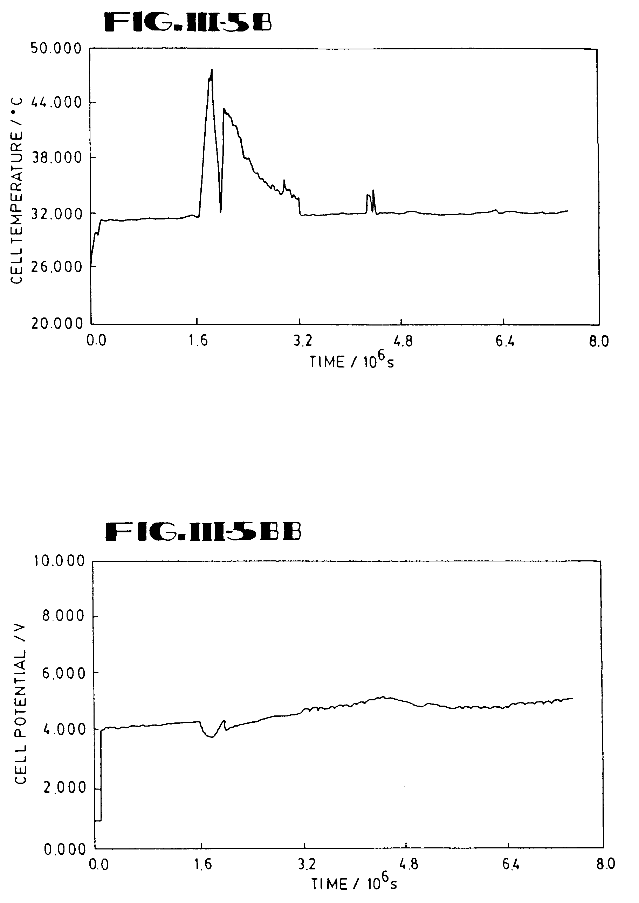

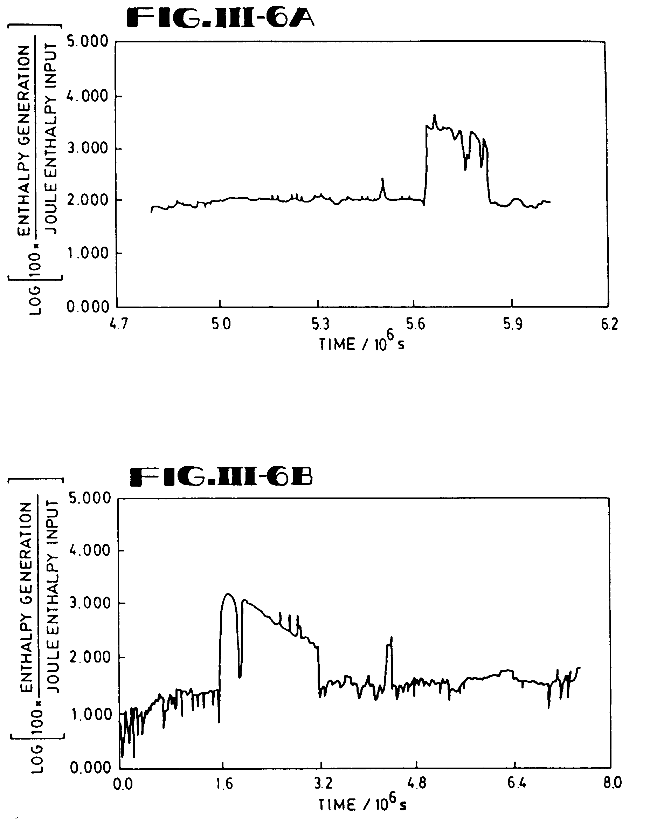

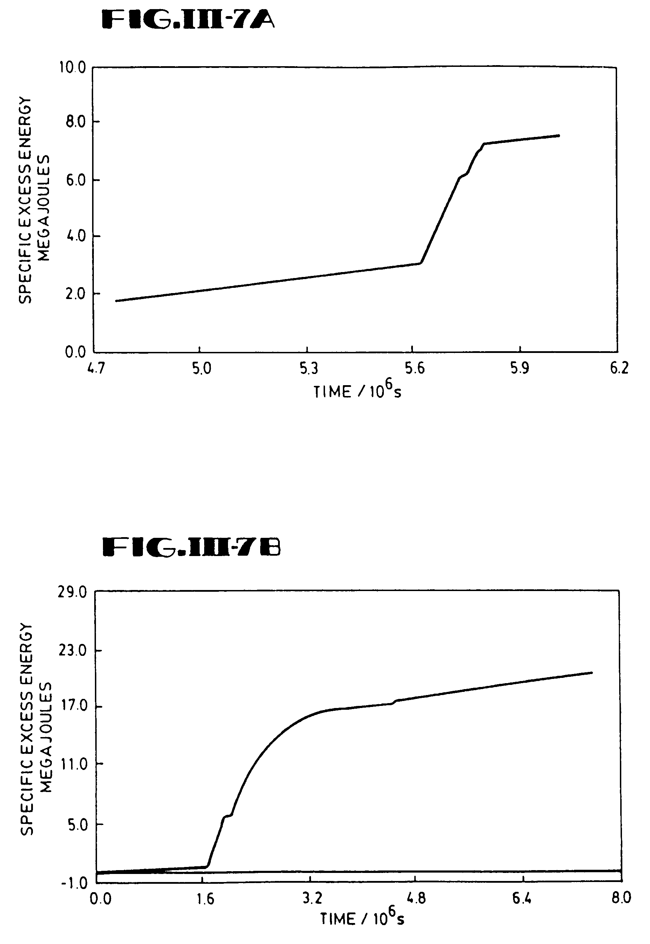

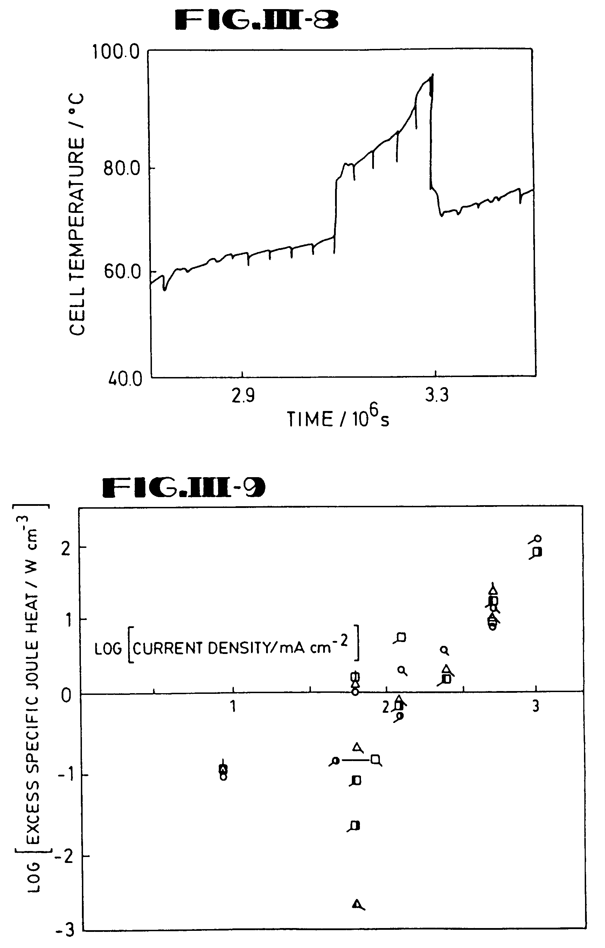

The anode or positive electrode 18 in the system typically includes a wire or sheet within the container, such as helical wire 18 which encircles the metal rod 16 as shown. The anode configuration shown in the figure is expected to produce a relatively uniform charge density in the rod during the electrolytic charging operation. The anode may be any suitable conductor, such as platinum, nickel, or carbon, which itself does not react with the liquid components in the container to produce undesired reactions.

A charge-generator source 20 in the system is connected conventionally to electrodes for producing the desired electrolytic decomposition. The source may be a steady direct current (D.C.) power source, as shown, or alternatively, an intermittent or pulsed D.C. charge or current source.

The source typically is set to produce a current density of at least about 1 mA/cm² cathode surface area. This minimum current level may be required to achieve the desired final chemical potential of isotopic hydrogen atoms in the metal lattice. Preferred currents are between about 2 and 2000 mA/cm², although even higher currents may be used and may actually be preferable for larger cathodes or with more conductive electrolytic fluids. For example, current levels of up to as high as 10,000 mA/cm² or higher might be used in certain applications. If the current is set too high, however, the diffusion rate of isotopic hydrogen atoms into the metal lattice may become rate limiting, biasing the system towards formation of molecular isotopic hydrogen, which lowers the efficiency of heat generation in the system. A stepwise electrolyte charging of the cathode, as illustrated in subsequent Sections, may be useful in avoiding the rate limiting effect particularly at increased current densities.

In a charging operation to accumulate isotopic hydrogen atoms, the source fluid is placed into the container 14 to a level which submerges the electrodes, and the charge-generating source is initiated by being set to a desirable current level. The total required run time for a metal lattice of known dimensions can be generally determined from the above diffusion coefficient of about $10^{-7}$ cm$^{-2}$ for hydrogen and isotopic hydrogen in the metal. Typically, for a metal rod whose diameter is in the mm range, run times of from several hours to several days may be required to reach the desired chemical potentials. For rods whose diameters are in the cm range, run times of up to several months or longer may be required. An example for charging is to charge a cathode at a relatively low current level of about 64 mA/cm² for about 5 diffusional relaxation times and then to increase the current to a level of 128, 256, 512 mA/cm² or higher in order to facilitate the heat generating events as is suggested by Table A6-1 in Section III. It has been found that the charging time (which varies at different cathode temperatures) generally follows the equation:

$$\text{time} \cong \frac{5\,(\text{radius})^2}{\text{diffusion coefficient}}$$

Thus, for a 0.2 cm radius palladium rod, the time needed for sufficient charging to initiate heat generation is:

$$\cong \frac{5(0.2\ \text{cm})^2}{10^{-7}\ \text{cm}^2\ \text{sec}^{-1}}$$

$$\cong 20\ \text{days}$$

The charging of the metal, i.e., electrolytic compression of isotopic hydrogen in the metal lattice, is carried out to a final chemical potential of isotopic hydrogen in the metal, due to accumulation/compression of isotopic hydrogen nuclei in the lattice, which is sufficient to produce a desired level of heat-generating events within the metal lattice, as evidenced both by the amount and duration of heat generated within the lattice, and, where the isotopic hydrogen is deuterium, by the generation of nuclear fusion products, such as neutrons and tritium.

Preferably the metal is charged to a chemical potential of at least about 0.5 eV above the chemical potential of metal hydride equilibrated at standard pressure (1 bar at 273° K) i.e. without energy input. Specifically, the chemical potential of the charged cathode metal is determined against a reference wire of the same metal, e.g., palladium, which has been charged electrolytically with the same isotopic hydrogen atoms, then allowed to equilibrate at standard pressure (1 bar). It is estimated that the reference wire contains about 0.6 atoms of isotopic hydrogen per metal atom at equilibrium. The chemical potential is determined from the voltage potential measured between the charged metal cathode and the equilibrated reference wire. It will be recognized by those skilled in the art that the chemical potential expressed in electron volts (eV) is generally equivalent to the measured voltage potential; i.e. a measured 0.5V generally translates to a 0.5 eV chemical potential. It will also be recognized that the chemical potential required to produce heat-generating events may depend on the metal being charged. Therefore, some metals, e.g., zirconium, may produce such events at different, perhaps lower, chemical potentials.

$$D_2O + e \rightarrow D_{ads} + OD^- \qquad\qquad (i)$$

$$D_{ads} + D_2O + e^- \rightarrow D_2 + OD^- \qquad\qquad (ii)$$

$$D_{ads} \rightarrow D_{lattice} \qquad\qquad (iii)$$

$$D_{ads} + D_{ads} \rightarrow D_2 \qquad\qquad (iv)$$

where $D_{ads}$ indicates adsorbed deuterium atoms, and $D_{lattice}$ indicates deuterium diffused into the lattice.

At potentials more negative than +50 mV (referenced to a reversible hydrogen electrode) with the Pd-D lattice is in the beta ($\beta$) phase, deuterium is in the form of isotopic protons and is highly mobile.

The overall reaction path of $D_2$ evolution consists dominantly of steps (i) and (ii) so that the chemical potential of dissolved $D^+$ is normally determined by the relative rates of these two steps. The establishment of negative overpotentials on the outgoing interface of some metal electrodes for hydrogen discharge at the ongoing interface (determined by the balance of all the steps (i) to (iv)) demonstrates that the chemical potential can be raised to high values; chemical potentials as high as 0.8 eV can be achieved using palladium diffusion tubes (2.0 eV or higher may be achievable).

Figure I-3 is a schematic view of an electrolytic system or cell 24 having a bipolar cell stack in a filter-pressed configuration. A cell container 26 is provided with a series of N electrode membranes, such as membranes 28, 30, 32, arranged in the container as shown. These membranes form the metal whose lattice is to be charged by electrolytic compression with isotopic hydrogen atoms, in accordance with the invention. The membranes are preferably close-packed sheets of palladium or the like. Each membrane includes heat fins, such as fins 28a, 28b associated with membrane 28, for dissipating heat generated in the membranes.

The membranes are joined by sealing to the walls of the container along their top, bottom, and side edges, and thus partition the interior of the container into N+1 closed compartments, such as the compartment 34 between the left side of the container in the figure and membrane 28, the compartment 36 between membranes 28, 30, and the compartment 38 between the membrane 32 and the right side of the container in the figure.

A valve-controlled conduit 40 communicates with compartment 34 for filling the chamber with source liquid, and for removing $O_2$ formed in the chamber during operation. A conduit manifold 42 communicates with the compartments other than compartment 34 through valves (not shown, one for each compartment) for filling each chamber with source liquid, and for removing $D_2$ formed in each chamber during operation.

The electrolytic driving force in the cell is provided by an anode 48 and a cathode 49 located at the opposite end walls of the container, as shown, and a charge-generator source 44 connecting these two electrodes. The electrodes may be any suitable electrode material. Preferably, the anode is platinum or carbon, and the cathode is palladium. The charge-generator source is designed to produce a current between the electrodes of preferably between about 2 and 2000 mA/cm$^2$ (total area of the membranes), as above.

A series of limiter circuits, such as circuit 46, one for each pair of membranes, such as membranes 28, 30, function during operation of the cell to equalize the currents in adjacent compartments, for a purpose to be described. Such limiter circuits are known in bipolar cell stack electrolytic cell circuits.

In operation, each compartment is filled with the source fluid, such as lithium deuteroxide (LiOD) and ordinary water in $D_2O$, and the current in the cell is adjusted to a suitable level. As indicated in the Figure, the voltage potential across the anode and cathode is distributed, in a series configuration, across each membrane, so that the left side of each membrane is negatively charged with respect to the immediately confronting anode or membrane surface, and the right side of each membrane is positively charged with respect to the immediately confronting membrane surface or cathode. Thus each compartment functions as an electrolytic cell in which the solvent source of isotopic hydrogens is electrolytically decomposed at one membrane surface to form isotopic hydrogen atoms which can then diffuse into that membrane.

The electrolytic reaction steps which are responsible for charging a metal lattice in the stacked-cell system will be considered, as in the Figure I-2 electrolytic cell, with respect to an alkaline solution of heavy water as a deuterium source, and the four reactions which can contribute to D compression in the membranes:

$$D_2O + e^- \rightarrow D_{ads} + OD^- \tag{i}$$

$$D_{ads} + D_2O + e^- \rightarrow D_2 + OD^- \tag{ii}$$

$$D_{ads} \rightarrow D_{lattice} \tag{iii}$$

$$D_{ads} + D_{ads} \rightarrow D_2 \tag{iv}$$

Reaction (i) occurs at the right (more negative) membrane in each compartment, giving rise to reactions (ii) to (iv) in the membrane, and to $OD^-$ species in the compartment. Because $D_{lattice}$ atoms exist predominantly as freely mobile nuclei, these nuclei tend to be drawn into and through the membrane toward the cathode in the cell (i.e., to the right in the figure). When the $D_{lattice}$ atoms reach the right side of the membrane, reaction (iii) in the reverse direction produces $D_{ads}$ which can then react with the $OD^-$ formed in the migrated-to compartment. Alternatively, the $D_{ads}$ atoms can react in the compartment, via reaction (iv) to form $D_2$ gas in the compartment. The charging process is continued until all of the plates are fully loaded.

As indicated above, the limiter circuits act to equalize the current in each compartment. It can be appreciated that by maintaining the current in each compartment substantially equal, the amount of $D_{ads}$ formed in one compartment and drawn through the membrane into the right-adjacent compartment will be substantially equal to the amount of $OD^-$ formed in this right-adjacent compartment. This minimizes the formation of $D_2$ formed in the compartments, i.e., maximizes the formation of $D_2O$ by reaction of $D_{ads}$ and $OD^-$ at the membrane.

One advantage of the stacked plate arrangement just described is that the amount of $O_2$ and $D_2$ formed in the system is minimized since $O_2$ formation is substantially limited to compartment 34 and $D_2$ formation is likewise minimized by recombining with $OD^-$ in each compartment. That is, the total chemical potential in the system, which is the sum of the individual chemical potentials of each membrane, per amount of molecular gas formed by electrolysis, is increased. The efficiency of the system is increased accordingly, and problems of recycling molecular gas are reduced.

The stacked plate configuration also allows for a rather dense packing of charged plates, without the very long diffusion times which would be required to fully charge a solid block. The dense packing of charged plates, in turn, will result in a much higher neutron beam flux, as measured, for example, at the right side of the cell, since a large percentage of neutrons ejected from each internal plate will pass through the entire series of plates in the cell.

## C. Charging with Metal Hydrides

Figure I-4 illustrates schematically an alternative system, indicated generally at 50, for compressing isotopic hydrogen atoms into a metal lattice, in accordance with the invention.

The metal to be charged in this system is in the form of an intimate mixture of the metal and a metal isotopic hydride, such as a fused metal isotopic hydride salt, or a mixture of a fused metal salt and a metal hydride, which provides the source of isotopic hydrogen atoms. Exemplary fused metal hydrides include Li/Na/K/D (deuteride), and related hydrides such as Li/Na/D. Exemplary mixtures of fused salts include eutectic mixtures of Li/Na/K/Cl and LiD, and related mixtures, such as Li/K/Cl and LiD or NaD or LiH, NaT, LiH or NaT.

The intimate mixture, which is shown in pellet form at 52 in Figure I-4 is formed by mixing metal particles, such as particles 54, with the fused salt, and formulating the mixture into a cohesive form, according to known pelletizing methods. The ratio of metal to hydride salts is calculated to provide a severalfold excess of isotopic hydrogen to metal atoms in the mixture.

The mixture is sintered at a suitable sintering temperature below the melting point of palladium, according to known sintering methods. A heating element 56 in Figure I-4 gives controlled heating of the intimate mixture. After sintering, the chemical potential of the material is measured, as above. If necessary, the sintered material may be further charged, e.g., electrolytically, to bring the chemical potential in the material to a desired level.

Alternatively, the mixture can be heated by high-energy lasers (not shown) under conditions which promote diffusion of hydrogen isotope atoms produced from the source into the lattices of the metal particles. More specifically, the heat source is designed to provide an energetic shock wave sufficient to drive the hydrogen atoms into the metal, to a final chemical potential of at least about 0.5 eV, within a period of about a μsec or less.

Devices for focusing high energy beams onto pelleted materials may follow, for example, beam technology developed in connection with inertial confinement of high-temperature plasmas.

It will be appreciated that the metal lattice formed by the sintering method can be prepared to contain selected mole ratios of isotopic hydrogens atoms, such as selected levels of deuterium and tritium atoms.

D. Thin-Film Lattices

Figures I-5 and I-6 illustrate two types of thin-film metal lattice composite electrodes designed to support more controllable fusion reactions, in accordance with another aspect of the invention. The electrode 41 illustrated in Figure I-5 is produced by forming a metal lattice thin-film 43 on an electrode substrate 45, such as carbon.

In one embodiment, the substrate 45 may be an "inactive" material which itself cannot be charged with isotopic hydrogen atoms to a level which supports nuclear fusion events.

Alternatively, the substrate 45 may be a material capable of supporting fusion reactions when charged with isotopic hydrogen atoms, as above. One advantage of this configuration is that the surface properties of the substrate material can be largely masked in such a composite structure. For example, the substrate 45 may be a platinum metal lattice which is coated with a thin palladium film 43. Here the palladium is effective both to promote surface adsorption and diffusion of isotopic hydrogen atoms into the electrode film 43, and to prevent catalytic formation of hydrogen gas at the platinum interface 44.

In the embodiment in which both the substrate and the film are lattices which can be charged with isotopic hydrogen, to produce heat-generating reactions, the substrate material is preferably one which, either because of its level of impurities or its surface catalytic properties, cannot by itself be readily charged electrolytically with hydrogen isotopic atoms. Preferred substrate metals include palladium, rhodium, ruthenium, iridium, osmium, nickel, cobalt, iron, zirconium, titanium, platinum, hafnium, and alloys thereof. Likewise the thin-film metal similarly is one which may support energy or neutron-producing reactions, at a selected chemical potential, and whose surface properties allow the metal to be charged readily. Preferred thin-film metals include those previously identified, including palladium, rhodium, ruthenium, iridium, osmium, nickel, cobalt, iron, zirconium, titanium, hafnium, and alloys thereof, most preferably palladium, rhodium, ruthenium, iridium, and zirconium.

The thin-film may be formed by a variety of known thin-film deposition methods, including sputtering, evaporation, and chemical vapor deposition. Typically, the deposition conditions are selected to produce a film of between about 50-500 Å in thickness, although thicker films may be suitable.

In one thin-film method, the deposition is carried out in a closed chamber by DC magnetron or RF plasma sputtering, at a selected pressure of isotopic hydrogen gas. The gas pressure in the chamber is selected isotopic hydrogen atoms in the thin-film lattice. For example, the sputtering may be carried out in a deuterium/tritium atmosphere, to "seed" the lattice with a desired concentration of isotopic hydrogen.

The composite electrode may be employed in an electrolytic cell, such as described above, in place of a solid metal lattice cathode. Here the thin-film lattice is charged electrochemically to a chemical potential sufficient to promote a fusion reaction, as above, preferably with continued supply of electrolytic current.

One advantage of the thin-film electrode, where the substrate is inactive, is the greater control over heat production which is possible, since the thin film which supports fusion reactions can be charged relatively quickly to a desired level, and the reaction will be expended relatively quickly after charging. Also, heat dissipation from the thin film can be more accurately controlled by fluid flow in contact with the film, for example, through the substrate.

Figure I-6 shows a tubular electrode 47 produced by forming a thin metal-lattice film 49 on a suitable tubular substrate 51. The substrate may be an inactive substrate, such as a carbon rod, or alternatively may itself be formed of a material having a lattice capable of supporting fusion reactions when charged with isotopic hydrogen atoms, as above.

In still another embodiment, the substrate 51 may be a material, such as tungsten, which is effective to absorb gamma rays or other radiation produced in the thin-film, with the production of heat. In this embodiment, the energy produced by reaction in the thin-film 49 can be dissipated both by internal and external fluid flow.

In still another embodiment, the substrate may be a selected material whose atoms can be transmuted by bombardment with high energy gamma rays, neutrons, $\alpha$ or $\beta$ particles produced by the reaction events in the thin film. Such a substrate may be used, for example, to produce selected metal isotopes or to dope a substrate, such as a semiconductor substrate, with selected metal isotopic dopants.

E. High Energy Exciting of the Metal Lattice

In accordance with another aspect of the present invention, the apparatus includes means for exciting the charged metal lattice with high energy rays or particles. The exciting means may include:

(a) incorporation of radioisotopic atoms (or atoms which become radioisotopic upon capturing neutrons) into the metal lattice;
(b) incorporation of radioisotopic atoms in the fluid source of isotopic hydrogen;
(c) formation of a thin metal lattice on a radioisotopic substrate;
(d) incorporation of a radioisotopic thin film on a metal lattice substrate;
(e) placement of a solid phase high-energy ray or particle emitter close to the lattice, such as within the core of the lattice;

(f) generation of neutrons in the lattice incorporation of beryllium or the like into the lattice, and/or the adjacent substrate;

(g) generation of $\alpha$-particles in the lattice by incorporation of boron or the like into the lattice and/or the adjacent substrate; or

(h) bombardment of the charged lattice by a high-energy particle source or accelerator, such as a neutron or positron source, or a proton or deuteron accelerator.

In one embodiment, the lattice contains radioactive atoms, such as $^{60}Co$, $^{90}Sr$, $^{106}Ru$, $^{117}Cs$, $^{147}Pm$, $^{170}Tm$, $^{210}Po$, $^{238}Pu$, $^{242}Cm$, or $^{244}Cm$, which emit gamma ( ) rays and/or alpha ($\alpha$) and/or beta ($\beta$) particles. Alternatively, or in addition, the lattice may contain atoms which form radioisotopic atoms upon bombarded with high-energy particles or upon capturing neutrons, or which eject high energy particles when bombardment with high-energy particles or upon capturing neutrons. The lattice, for example, may contain beryllium, which produces neutrons when bombarded with alpha particles, or boron, which produces alpha particles when bombarded with thermal neutrons, or $^{12}C$ which can emit neutrons when bombarded with high-energy neutrons. In another embodiment, the charged lattice is placed against a radioisotopic source or submerged in a fluid suspension or solution of radioisotopic atoms. In still another embodiment, the lattice is bombarded with high-energy neutrons, protons, deuterons or the like from an external high-energy particle source, such as a particle accelerator or an electrical discharge.

F. Heat and Neutron Generating Events

This section considers fusion-related heat generating events which are believed to occur in a lattice structure charged with isotopic hydrogen. Several basic heat generation experiments performed in support of the present invention were based on the cathodic reduction of $D_2O$ from liquid phase at near room temperature using current densities between about 0.8 and up to 70 mA/cm$^2$. The deuterium atoms were compressed into sheet and rod samples of palladium metal from 0.1M LiOD in 99. 5% $D_2O$ + 0.5%$H_2O$ solutions. Electrode potentials were measured with respect to a Pd-D reference electrode at phase equilibrium, as described above. The following types of observations were made:

(1) Calorimetric measurements of heat balances at low current densities ($<1.6$mA cm$^{-2}$) were made using a 2mm x 8cm x 8cm Pd sheet cathode (obtained from Johnson-Matthey, PLC) surrounded by a large platinum sheet counter electrode. Measurements were carried out in Dewar cells maintained in a large constant temperature water bath (300°K), the temperature inside the cell and of the water bath being monitored with Beckmann thermometers. The heavy water equivalent (HWE) of the Dewar cell and contents and the rate of Newton's law of cooling losses were determined by addition of hot $D_2O$ and by following the cooling curves.

(2) Calorimetric measurements at high current densities were carried out using 1, 2, and 4 mm diameter x 10 cm long rods (obtained from Johnson-Matthey, PLC) surrounded by a platinum wire anode wound on a cage of glass rods. The Dewar cells were fitted with resistance heaters for determination of Newton's law of cooling losses; temperatures were measured using calibrated thermistors. Stirring in these experiments (and in those listed under 1) was achieved by gas sparging using electrolytically generated $D_2$. In long term experiments, it has been confirmed that the rates of addition of $D_2O$ to the cells required to maintain constant volumes is that required if reactions (i), (ii), and (iv) (Section IB above) are nearly balanced by the reaction:

$$4OD^- \rightarrow 2D_2O + O_2 + 4e^- \qquad\qquad (v)$$

Furthermore, subtraction of the ohmic potential losses in solution for the cell containing the large platinum-anode shows that the electrolysis of the $D_2O$ is the dominant process, i.e., it is assumed that the joule heating is close to that required if the overall reaction is controlled by processes (i), (ii), and (iv). With this assumption, it has been found that the calorimetric experiments using the large sheet Pd-cathode, the Newton's law of cooling almost exactly balances the rate of joule heating (after prolonged electrolysis to saturate the metal lattice), when the metal is charged at a current density of about 0.8 mA/cm$^2$.

At higher current densities of 1.2mA cm$^{-2}$ and 1.6mA cm$^{-2}$ excess enthalpy generation of $>9\%$ and $>25\%$ of the rate of joule heating was observed (these values make an allowance of about 4% for the fact that $D_2$ and $O_2$ evolution takes place from 0.1M LiOD rather than $D_2O$ alone). This excess enthalpy production was found to be reproducible in three sets of long term measurements.

Table I-A below shows the lattice heating effects which were seen with a variety of cathode geometries, sizes and current densities. The excess specific heating rate was calculated as the amount of heat produced less the joule-heat input used in charging the electrode. The joule-heat input J, also referred to herein as the joule-heat equivalent, was determined by the equation:

$$J = I \,(V\text{-}1.54 \text{ volts})$$

where I is the cell current, V, the voltage across the electrodes, and 1.54 volts is the voltage at which reactions (i), (ii), and (iv) balanced by reaction (v) are thermoneutral, i.e., the voltage where the cell neither absorbs nor gives out heat. The excess specific heat values are expressed as excess specific heat rate in watts/cm$^3$.

TABLE I-A

| Electrode Type | Electrode Dimensions | Current (mA/cm$^2$) | Excess Specific Heat Rate (watt/cm$^3$) |
|---|---|---|---|
| rod | .1x10cm | 8 | .095 |
| rod | .1x10cm | 64 | 1.01 |
| rod | .1x10cm | 512 | 8.33 |
| rod | .2x10cm | 8 | .115 |
| rod | .2x10cm | 64 | 1.57 |
| rod | .2x10cm | 512 | 9.61 |
| rod | .4x10cm | 8 | .122 |
| rod | .4x10cm | 64 | 1.39 |
| rod | .4x10cm | 512 | 21.4 |
| sheet | .2x8x8cm | .8 | 0 |
| sheet | .2x8x8cm | 1.2 | .0021 |
| sheet | .2x8x8cm | 1.6 | .0061 |
| cube | 1 cm$^3$ | 125 | overheating |

The parameters which affect enthalpic heat production in the compressed lattice, and the nature and magnitude of the effects can be appreciated from the following observations on the Table I-A data:

(a) excess enthalpy heat generation (the total heat produced in the lattice less the joule heat equivalent required to charge the lattice and maintain the lattice in a charged condition) is markedly dependent on the applied current density (i.e., magnitude of the shift in the chemical potential) and is proportional to the volume of the electrodes, i.e., the heating events are occurring in the bulk of the Pd-electrodes.

(b) enthalpy generation can exceed 10 watts/cm$^3$ of the palladium electrode; this is maintained for experiment times in excess of 120 hours during which typically heat in excess of 4 MJ/cm$^3$ of electrode volume was liberated.

(c) excess heat substantially in excess of breakeven can be achieved. In fact, it can be seen that reasonable projections to 1000% can be made.

(d) the effects have been determined using $D_2O$ with small amounts (0.5-5%) ordinary water. Projection to the use of appropriate $D_2O/DTO/T_2O$ mixtures (as is commonly done in fusion research) might therefore be expected to yield thermal excesses in the range $10^3$ - $10^6$% (even in the absence of spin polarization) with enthalpy releases in excess of 10 kw/cm$^3$. It is reported here that under the conditions of the last experiment reported in the table, using $D_2O$ alone, a substantial portion of the cathode fused (melting point 1554°), indicating that very high reaction temperatures can be achieved.

One possible explanation for the generation of excess enthalpic heat seen in the charged lattice would involve reactions between compressed nuclei within the lattice. As noted above, isotopic hydrogen nuclei dissolved in a metal lattice in accordance with the invention are highly compressed and mobile. In spite of this high compression, molecular isotopic hydrogen, i.e., $D_2$ is not formed, due to the low S-electron character of the electronic wavefunctions. The low-S character, however, combined with the high compression and mobility of the dissolved species, suggests the possibility for a significant number of close collisions between the dissolved nuclei. It is therefore plausible to consider that some of these collisions produce reactions between nuclei. Three possible reactions, among others, which may occur in the case of deuterium isotopic hydrogen are:

$$^2D + {}^2D \rightarrow {}^3T(1.01MeV) + H(3.02MeV) \tag{vi}$$

$$^2D + {}^2D \rightarrow {}^3He(0.82MeV) + n(2.45MeV) \tag{vii}$$

$$^2D + {}^2D \rightarrow {}^4He + gamma \ (24 \ MeV) \tag{viii}$$

These reactions would be readily detected by the production of tritium (T), and generation of high energy neutrons (n) and gamma rays.

The rate of production/accumulation of tritium (T) was measured using cells (test tubes sealed with Parafilm) containing 1mm diameter x 10cm palladium rod electrodes. One mL samples of the electrolyte were withdrawn at 2 day intervals, neutralized with potassium hydrogen phthalate, and the T-content was determined using Ready-Gel liquid scintillation cocktail and a Beckmann LS5000TD counting system. The counting efficiency was determined to be approximately 45% using standard samples of T-containing solutions.

In these experiments, standard additions of 1mL of the electrolyte were made following sampling. Losses of $D_2O$ due to electrolysis in these and all the other experiments recorded here were made up using $D_2O$ alone. A record of the volume of $D_2O$ additions was made for all the experiments. In all of the experiments, all connections were sealed.

The tritium measurements show that DTO accumulates in the charged palladium cells to the extent of about 100 dpm/ml of electrolyte. Figure I-8, which shows the $\beta$-decay scintillation spectrum of a typical sample, demonstrates that the species is indeed tritium.

G. Application: Electrical Generator

Figure I-9 is a schematic view of electrical generator apparatus 32 constructed according to one embodiment of the invention. The apparatus generally includes a reactor 34 which generates heat in accordance with the principles of the invention, and a generator 36 which transforms heat produced in the reactor to electricity. The embodiment illustrated employs electrolytic compression of isotopic hydrogen atoms from an aqueous medium to charge a metal cathode.

Reactor 34 includes a reactor chamber 37 enclosed in a shield 38 which provides neutrons shielding. Where, as here, the source of isotopic hydrogen atoms is an aqueous medium, the chamber is preferably designed for high pressure operation to allow fluid temperatures in the reactor substantially above 100°C.

The reactor chamber houses one or more cathode metal rods, such as rod 40, which serve as the metal lattice to be charged with isotopic hydrogen atoms, in accordance with the principles of the invention, and which therefore have the properties discussed above which allow compression or accumulation of isotopic hydrogen atoms in the metal lattice. Although a single metal rod would be suitable for a relatively small-scale reactor, where the rods are several cm or larger in diameter, a plurality of rods is preferred, due to the long periods which would be required for diffusion into a large-diameter rod. Alternatively, the cathode may be a sheet in a pleated or spiral form. An anode 41 is formed on the outer chamber surface, as shown.

The reactor chamber is filled with the source of isotopic hydrogen atoms, such as LiOD in deuterated water, as shown in the figure at 42. Electrolytic decomposition of the source, and consequent diffusion of isotopic hydrogen atoms into the metal cathodes, is driven by a charge-generator source 44, as detailed above. The cathode, anode, and charge-generator source are also referred to herein collectively as means for producing diffusion of isotopic hydrogen from the source into the lattice of the metal cathode(s), and as electrolytic means.

The generator in the apparatus includes a heat exchange system 46 which operates to circulate cooled fluid through a conduit 48 into the reactor, and fluid heated within the reactor to a boiler (not shown) within the generator, for steam generation, by a conventional steam turbine in the generator. Thus heat produced in the charged metal cathode(s) in the reactor is thus utilized, via heat exchange between the reactor and the generator, to drive the generator for electrical generation. Although not shown, the generator may be connected to source 44, for supplying a portion of the electricity generated in operation of the apparatus to source 44.

The generator may also include a reactor-fluid circulation system for supplying source material to the reactor, and for removing reactor byproducts, including tritium.

It will be appreciated that the reactor may alternatively be designed for operation at temperatures of several hundred degrees C or higher, to produce more efficient conversion of lattice heat into steam, in a steam turbine. Such a reactor would preferably utilize a metal/fused deuteride salt mixture, with high energy heating to produce isotopic hydrogen atom diffusion into metal particles, as described herein. The resulting rapidly heated particle mass could be cooled, for example, by circulating lithium or the like, according to known reactor designs.

From the foregoing, it can be appreciated how the generator apparatus meets various objects of the invention. The apparatus utilizes deuterium, a virtually inexhaustible source of energy, to produce heat, and the products of the reaction -- tritium and presumably isotopes of He -- are either short-lived (tritium) or relatively benign (helium). Further, the apparatus can be constructed on a small scale, suitable, for example, for a portable generator.


## H. Reactor Products Recovery

The heat-generating reactions which occur in a metal lattice charged with deuterium can be characterized by tritium production. Tritium can be formed in the reactor either as tritiated heavy water (DTO) or, by electrolysis of DTO, as tritiated deuterium gas (DT). Where the reactor source also contains ordinary water, additional tritiated species HTO and HT gas may also be formed. Since the amount of tritium in the reactor will build up over time, the reactor is preferably provided with an extraction system for removing tritium and maintaining the tritium levels in the reactor within preselected levels.

Figure I-10 is a schematic view of an extraction system 160 designed for removing tritium from both reactor water and gas generated within the reactor. The system is designed to carry out two separate processes: one which transfers tritium in the reactor source to deuterium or hydrogen gas, and the second to separated tritiated isotopic hydrogen gas by cryogenic distillation.

The catalytic exchange of tritium is carried out in a vapor-phase or liquid-phase hydrophobic catalytic bed, indicated generally at 162. In the liquid-phase method, $D_2O/DTO$ or $H_2O/DHO/D_2O/DTO/HTO$ from the reactor cell is supplied through a conduit 164 which in turn is supplied from the cell to the catalytic bed.

The water from the reactor cell is brought in direct contact with a deuterium gas stream by counter-current circulation through the bed. The deuterium gas stream may be supplied from a gas-distillation column 164 which is used, as described below, in tritium separation. The countercurrent flow over the catalytic bed promotes the reaction:

$$DTO + D_2 \xrightarrow{catalyst} D_2O + DT.$$

The water, which is now enriched in $D_2O$, is returned to the reactor cell through a tube 168. The design and operation of liquid-phase catalytic exchange systems suitable for use in the present invention have been described in prior publications and are well known in the art.

Alternatively, the catalytic bed may be designed for liquid-phase counter-current operation, according to known methods. Here the water from the reactor is first vaporized and superheated, then passed over the hydrophobic catalytic bed counter-current to the deuterium gas stream. After the exchange reaction, the gaseous stream is condensed and returned to the reactor.

The gas stream coming out of the exchange bed is dried and purified, and passed through a tube 170 to cryogenic distillation column 166, through a pump 161. The column contains Sulzer packing, and is cooled with liquid helium from an auxiliary liquid helium circuit 170. Distillation is carried out at about 1.5 bar. The $D_2$ which is concentrated at the top of the column, and which is partially stripped of tritium, is supplied to the catalytic bed through a conduit 174, as indicated.

The heavier isotopic hydrogen gases in the column, i.e., DT and $T_2$, are circulated to a second distillation column 179 packed with dixon rings, and cooled by a liquid helium circuit 178. The DT which concentrates at the upper portion of the column may be cycled through a converter 180, to obtain $T_2$, according to the reaction:

$$2\,DT \rightarrow T_2 + D_2.$$

This material is separated in the column to produce $D_2$ and DT at the upper end of the column and $T_2$ at the lower end. The $T_2$ is withdrawn periodically and stored either in a gas container, such as container 182, or as a metal tritide. The system is capable of separating tritium to about 98 mole percent purity.

It will be appreciated that where the reactor water contains ordinary water, $H_2$ and DH isotopic gas will also be formed both in the reactor and by catalytic exchange with $D_2$. This gas may be separated from $D_2$, DT and $T_2$ in the cryogenic distillation columns, and easily disposed of, e.g., by combustion with $O_2$.

The above described system is designed to remove tritium from the reactor water. As noted above, the electrolytic compression process occurring in the reactor also generates molecular isotopic hydrogen, e.g., $D_2$ and DT formed by electrolytic decomposition of heavy water containing tritiated heavy water. This gas may be reconverted to water, by catalytic combustion within the reactor, as noted above.

Alternatively, or in addition, the isotopic gases may be purified in the tritium extraction system described above, by introducing gas from the reactor directly into the cryogenic distillation columns in the system, via a valved conduit 184 in the tritium-extraction system.

The gas is separated in the two column distillation system, with separated $D_2$ being supplied to the catalytic bed, for tritium exchange with reactor water, and the DT generating $D_2$ and $T_2$, as above.

From the foregoing, it can be appreciated how various additional features of the invention are met. The heat-generating reactions within the metal lattice of the reactor generate tritium, which itself can be utilized as a source of isotopic hydrogen in a reactor of this type, and can also be readily isolated in pure form for other purposes, such as a variety of medical and diagnostic uses.

References for Section I (Incorporated by Reference):

1. "Technology Assessment Report on Starpower: The U.S. and International Quest for Fusion Energy", US Congress, Office of Technology Assessment, 100th Congress.

2. Mueller, J.P., et al., "Metal Hydrides", Academic Press, NY (1968).

3. Ron, M., et al. , eds. "Metal Hydrides 1984, Vols. I and II, Elsevier, NY (1985).

4. Veziroglu, T. N., ed., "Metal-Hydrogen Systems", Pergamon Press, NY (1982).

5. Dandapani, B., and Fleischmann, M., J. Electroanal. Chem., 39:323 (1972).

6. Bambakadis, G., ed., "Metal Hydrides", Plenum Press, (1981).

## SECTION II

### Neutron Generation and Applications

According to one aspect of the invention, it has been discovered that isotopic hydrogen atoms, such as deuterium atoms, when diffused into the lattice of metals which are capable of dissolving hydrogen, can achieve a compression and mobility in the lattice which is sufficient to produce neutron-generating events. The neutron-generating events are also characterized by extra-enthalpic heat generation; that is, the amount of heat generated in the lattice is substantially greater than the joule-heat equivalent used to charge the lattice to a chemical potential at which the neutron-generating events occur. Section I, as previously noted, describes materials and conditions suitable for achieving the required conditions for the neutron-generation events within a metal lattice.

Neutrons produced by the metal lattice are collimated to produce a neutron beam, and this beam is used in a variety of neutron-beam methods for analyzing materials. This Section describes exemplary apparatus designed for neutron-beam analysis of target materials.

### Neutron-Generating Events

As noted above, and according to an important aspect of the invention, it has been discovered that a metal lattice charged with hydrogen isotope atoms to a chemical potential of at least about 0.5 eV promotes neutron-generating events which are evidenced by the production of high-energy neutrons.

One explanation for the generation of neutrons produced in the metal lattice seen in the charged lattice is the possibility of reactions between compressed nuclei within the lattice. As noted above, hydrogen isotopic nuclei dissolved in a metal lattice at chemical potentials above about 0.5 eV are highly compressed and mobile. In spite of this high compression, $D_2$ is not formed, due to the low S-electron character of the electronic wavefunctions. The low-S character, however, combined with the high compression of the dissolved species, suggests the possibility for a significant number of close collisions between the dissolved nuclei. It is therefore plausible to consider that some of these collisions produce reactions between nuclei. Two reactions which might be expected in the lattice containing predominantly deuterium nuclei are:

$$^2D + {}^2D \rightarrow {}^3T(1.01 MeV) + H(3.02 MeV) \tag{v}$$

$$^2D + {}^2D \rightarrow {}^3He0.82 MeV) + n(2.45 MeV) \tag{vi}$$

These reactions would account for the generation of tritium ($^3$H) and neutrons (n) in the metal.

To measure neutron generation in a charged metal lattice, the neutron flux from a 1mm diameter x 10cm long palladium rod cathode was measured using an Harwell Neutron Dose Equivalent Monitor, Type 95/0949-5. The counting efficiency of this Bonner-sphere type instrument for 2.5 MeV neutrons was estimated to be about $2.4 \times 10^{-4}$. Further, the collection efficiency of the spectrometer for the cell geometry used is very poor. Nonetheless, these experiments monitored neutron generation levels severalfold above background at the monitoring electrode.

Several basic heat generation experiments were performed to demonstrate that the neutron-generating events occurring in a charge metal lattice also involve the production of excess enthalpic heat, i.e., heat in excess of the joule-heat equivalent energy used in charging the metal lattice. The experiments were based on the cathodic reduction of $D_2O$ from liquid phase at near room temperature using current densities between about 0.8 and up to 70 mA/cm$^2$. The deuterium atoms were compressed into sheet and rod samples of palladium metal from 0.1M LiOD in 99.5% $D_2O$ + 0.5%$H_2O$ solutions. Electrode potentials were measured with respect to a Pd-D reference electrode charged to phase equilibrium, as described above.

Applications

A. Neutron-Beam Generator

Figure II-5 is a schematic view of a neutron-beam generator 60 constructed according to the invention. The generator includes a stacked-plate reactor 62 which generates neutrons in accordance with the principles of the invention, and a collimator 64 which collimates neutrons produced in the reactor to form a neutron beam indicated at 61.

Where the source of isotopic hydrogen yields both deuterium and tritium atoms, another reaction which would be expected in the lattice is:

$$^2D + {^3T} \rightarrow {^3He}(0.82MeV) + n(17.58\ MeV) \qquad\qquad (vii)$$

which would yield neutrons with an energy distribution in the 17.5 MeV range.

The collimator illustrated in Figure II-5 is a divergent collimator designed for producing a beam of high-energy or thermal neutrons (if the neutrons from the reactor are thermalized before reaching or within the collimator). An upstream collimator section 80 is formed of cast or machined aluminum, and has a circular aperture 82 adjacent the reactor. A shutter 84 made of boral ($B_4C$) is used to control exposure. The interior of the barrel is lined with a cadmium or boral neutron shield 86, typically less than 1mm thick. For use in generating thermal neutrons, a material effective to thermalize the neutrons, such as a polyethylene block (not shown), may be interposed between the reactor and collimator or housed within the collimator.

A downstream collimator section 88 is formed of aluminum or the like and has a boron or lead liner 90 to help suppress gamma rays. Interposed between sections 80 and 88 is a shielded filter housing 92 containing a removable filter 94, such as a bismuth monocrystal filter, for filtering gamma rays from the neutron beam.

The collimator and reactor may be submerged in a pool whose cement wall is indicated at 96. The pool acts as a neutron shield.

Published references, such as "Collimators for Thermal Neutron Radiography" Markgraf, ed. D. Reidel Pub. Co., Boston MA, (1987), describe further details on the construction of neutron-beam collimators. The collimator in the apparatus is also referred to herein as collimator means.

It can be appreciated from the foregoing how the neutron-beam generator meets various objects of the invention. The source of neutrons in the generator is simple and inexpensive, requiring, in one embodiment, only an electrolytic system for slow charging of a metal lattice with isotopic hydrogen atoms. Unlike conventional radio-isotope sources of neutrons, the source can be readily recharged without isotope handling. Further, health and safety problems associated with fissionable isotopes such as polonium or radium are avoided.

Although the system has a limited neutron flux output when compared with a nuclear reactor or particle accelerator, the neutron output can be selectively increased, for example, by increasing the number and/or thickness and/or chemical potential of the metal plates in a reactor. Further, the energy distribution of the beam neutrons can be selectively varied from low-energy thermal neutrons (or even cold neutrons) produced by thermalizing the beam, according to conventional methods, up to about 3.5 MeV for a deuterium charged reactor and 17.5 MeV for a metal lattice charged with a mixture of deuterium and tritium atoms.

B. Neutron Radiography

Radiography is a technique by which a shadow picture of the "inside" of a target material is produced by exposing the material to a beam of radiation. The important material-related parameter in radiography is the cross-section of the material, which describes the probability that an atom will interact with the radiation beam passing through the material. In the case of X-ray radiography, the cross-section of elements generally increase with increasing atomic weight, so that high molecular weight atoms, such as lead, provide effective shielding against penetration by the radiation.

By contrast, in neutron radiography, the absorption cross-section is quite independent of size, and in particular, is relatively high for atoms such as hydrogen, lithium, boron, and gold, and relatively low for elements such as aluminum, sulfur, carbon, oxygen, and oxygen ("Neutron Radiative Capture", Chrien, R.E., ed., Pergamon Press, New York, (1984)). Neutron radiography thus provides a unique method for detecting the presence of the high cross-section elements, such as boron, in a lower cross-section material, or conversely, the presence of a low cross-section material, such as carbon, in a higher cross-section material.

Figure II-6 is a schematic view of apparatus 100 designed for neutron radiography, according to one embodiment of the invention. The apparatus generally includes a charged-metal reactor 102 for producing high energy neutrons, a collimator 104 for collimating neutrons into a neutron beam, indicated at 106, and a detector chamber 108 where radiography of a sample material 110 takes place.

The reactor and collimator employ the general design features discussed in Section IIA above. Where, as in the usual case, the neutron beam energy is in the thermal-neutron energy range, the neutrons can be thermalized within the collimator, or prior to entering the collimator by conventional means, such as passage through a polyethylene block.

The sample chamber in the apparatus includes suitable support means (not shown) for supporting the sample or target material in a position in which the beam is directed onto the sample. Also included in the chamber is a film plate 112 on which the radiographic image of the sample is recorded, and a converter 114 from which film-sensitive particles, e.g., beta particles, are emitted when the converter surface is struck by neutrons. The converter is preferably placed in direct contact with the film and is formed of a thin gadolinium film or the like capable of emitting film-sensitive particles in response to neutron bombardment. The film and converter are also referred to herein collectively as recording means. The reader is referred, for example, to Harms and Wyman, "Mathematics and Physics of Neutron Radiography", D. Reidel Publishing Co., Boston, Massachusetts (1986) for a discussion of various types of recorder means employed in neutron radiography.

The apparatus may be employed in a variety of thermal and high-energy radiographic applications, such as described in "The Neutron and Its Applications", Schofield, ed. , The Institute of Physics, London, England (1983), particularly for structural analysis of explosive devices, ceramic materials, electronic devices, mechanical assemblies, and aircraft turbine blades.

## C. Neutron Diffraction

Neutron diffraction provides information about the positions and motions of nuclei in crystalline or semi-crystalline material, as deduced from scattering of neutrons in a beam by the nuclei in a sample material. The method differs from X-ray diffraction or crystallography techniques in which the scattering centers of the X-ray beam are electron clouds. Because the neutron beam depends on scattering events involving nuclei, several types of information can be obtained which are not generally available by X-ray diffraction:

First, since the scattering cross-section of nuclei is not dependent on atomic number in any systematic way (see above), the nuclear density map which is constructed from the diffraction pattern can enhance many lighter atom sites, as hydrogen-atom sites, which are masked in an electron density map.

Secondly, the method is able to distinguish and localize isotopic atom sites, because the nuclei of different isotopes of the same atom may scatter neutrons quite differently. The method is thus particularly useful for crystallographic analysis of samples in which specific isotope substitutions have been made. For example, the analysis of the three dimensional structure of complex macromolecules, such as proteins, may be simplified by substitution of deuterium or tritium at selected amino acid sites, to pinpoint the location of these sites in the diffraction pattern.

Finally, neutron-beam diffraction has the ability to detect paramagnetic scattering centers, due to additional neutron scattering due to the interaction of the magnetic moment of the atom with that of the neutron. This allows investigation of the magnetic structures which are responsible for interesting magnetic properties of a sample, such as ferromagnetism, anti-ferromagnetism, and helimagnetism.

Figure II-7 is a schematic view of an apparatus 120 for use in neutron-beam analysis of a sample material. In this apparatus, neutrons produced by a neutron reactor 122, and collimated by collimator 124 are directed onto a single-crystal monochromator 126. The monochromator crystal functions to reflect those neutrons which have a particular wavelength, and therefore energy, to produce a reflected output beam having a selected range of neutron energies. The construction of the reactor and collimator have been described above. The collimator is preferably designed to produce a narrow beam spread, e.g., within about +/- 0.5 degrees.

The monochromatized beam is directed onto a sample material 130, producing a scattered beam whose intensity, at various scattering angles, is related to the crystalline structure and atomic composition of the sample, as outlined above. The distribution of the scattered neutrons is measured by a rotating detector or detector means 132 designed to measure neutron beam intensity over a large scattering angle, as shown. The neutron detector is preferably a cylindrical counter filled with $BF_3$ gas, according to conventional neutron detector construction (Bacon, G. E., "Neutron Physics" Wykeham Publications, London, (1969).

The apparatus may be employed in a variety of neutron scattering such as described in "Neutron Radiative Capture" Chrien, ed., such as determining the atomic and molecular structure of organic and bioorganic molecules, and for investigating static and dynamic aspects of molecular disorder and phase transitions in molecular systems.

### D. Radiative Neutron Capture

Neutron-radiative capture involves collision of neutrons with a target nuclei to form either radioactive or very short lived compound nuclei. If the neutron collision produces radioactivity, i.e., emission processes with a measurable half life, the nature of the nuclei involved in neutron absorption can be determined by measuring gamma-ray and/or alpha or beta particle emission, and correlating these with the spectra and/or particle emission characteristics of known samples. This method is also known as neutron activation analysis, and has been used widely for determination of elements or compounds present in a sample material.

If the lifetime of the neutron-radiative events is on the order of $10^{-16}$ to $10^{-18}$ sec or less, the nature of the sample material is determined from the gamma-ray spectra of the material. This approach is sometimes referred to as prompt emission gamma-ray analysis. The prompt emission technique is complementary to neutron activation analysis, in that many target elements do not form stable radioactive nucleons by neutron bombardment. The prompt emission method also has the advantages that it is instantaneous, non-destructive, and produces negligible residual activity (reference 1).

Figure II-8 is a schematic view of an apparatus 140 for use in prompt neutron-radiative capture analysis of a sample material. In this apparatus, neutrons produced by a neutron reactor 142, and collimated by collimator 144 are directed onto a sample material 146 in a sample chamber 148. The construction of the reactor and collimator have been described above. The neutrons produced by the reactor, either upstream of or within the collimator, may be thermalized and/or monochromatized, such as by methods indicated above.

The gamma spectra produced in the sample measured by a conventional gamma detector or detector means 150, such as a solid state germanium detector. For slow-radiative neutron capture processes, the apparatus may be modified for detection of radioactive decay particles, such as by the addition of scintillation detectors for detecting alpha or beta particles.

The apparatus has a wide range of analytical applications, including analysis of isotopic material, museum or archaeological samples, sensitive detection of environmental contaminants, detection of explosive materials for airport security, forensic analysis, and medical diagnosis.

Although this part of the invention has been described with reference to particular embodiments, constructions, and applications, it will be apparent to one skilled in the art that various changes and modifications may be made without departing from the invention. In particular, it will be apparent that the neutron beam generator will have applications outside of elemental and crystallographic analysis, for example, in medicine, for the treatment of solid tumors with high-energy neutron beams.

## SECTION III

### Detailed Analysis of Enthalpic Heat Production

The present section relates to additional findings that deuterons highly compressed by cathodic polarization in a palladium host lattice generate enthalpy in excess of that which can be ascribed to the overall enthalpy input to the electrolytic reaction

$$2D_2O \rightleftharpoons 2D_2 + O_2 \tag{i}$$

The magnitude of the excess enthalpy was so large (typically 1-20 watts $cm^{-3}$ of the electrode volume maintained for periods of 100 hours i.e., giving 0.36 - 7.2MJ $cm^{-3}$ over the measurement cycles) that it is not possible to ascribe this enthalpy release to any chemical process 9[1,2].

The most surprising feature of these results (apart from the fact that nuclear processes can be induced at all in this way) is that the enthalpy release apparently is not due to either of the well established fusion reactions [3]:

$$^2D + {}^2D \rightleftharpoons {}^3T \ (1.01 \text{ MeV}) + {}^1H \ (3.02 \text{ MeV}) \tag{ii}$$

$$^2D + {}^2D \rightleftharpoons {}^3He \ (0.81 \text{ MeV}) + n \ (2.45 \text{ MeV}) \tag{iii}$$

which have the highest (and roughly equal) cross-sections of the known reaction paths for high energy deuterons. Although low levels of tritium and, possibly, of neutrons were detected,[1] the enthalpy release was primarily one which is aneutronic and atritonic. Other reported works suggest that a primary tritium process may also be involved. [4-8]

Successive series of measurements carried out showed that it was necessary to carry out many experiments on a substantial number of electrodes and over long periods of time (the median duration chosen for a measurement cycle was 3 months). It was necessary therefore to adopt a low cost calorimeter design; some of the reasoning underlying the choice of the single compartment Dewar-type cell design, Figure III-1, is outlined herein.

All measurements reported in this Section were carried out with 0.1, 0.2, 0.4 and 0.8 cm diameter palladium as well as 0.1 cm diameter platinum rod electrodes. The palladium electrodes (Johnson Matthey, PLC) came from three separate batches of material and a typical analysis is given in Table III-1.

TABLE III-1

| Typical constitutional analysis of the Johnson-Matthey palladium rods used in this work. | |
|---|---|
| Element | % by weight |
| Ag | 0.0001 |
| Al | 0.0005 |
| Au | 0.003 |
| B | 0.002 |
| Ca | 0.003 |
| Cr | 0.0002 |
| Cu | 0.001 |
| Fe | 0.001 |
| Mg | <0.0001 |
| Ni | 0.0001 |
| Pt | 0.001 |
| Si | <0.0001 |

The batch numbers of palladium utilized are identified in the results given below. A more detailed cell 200 of the present invention is of the Dewar type and is shown in Figure III-1.

In this cell, a palladium electrode 212 was welded to a 0.05 cm diameter palladium lead wire 214 and this lead 214 (as well as that 216 to the platinum anode 218) was covered with glass shields 220 in order to avoid any possible recombination of deuterium and oxygen in the gas head space 222 of the cell 200. The platinum (Johnson Matthey, 99.9%) helical anode 218 was tightly wound with a close spacing on a cage 224 of glass rods surrounding the cathode 212. The electrodes 212, 218 were held in place by the deep Kel F plug and Kel F spacer 226 at the bottom of the cell 200. The configuration of the anode and cathode assured the establishment of a uniform potential over the surface of the cathode 212. This assures uniform and high levels of charging of the cathode 212.

Temperature measurements were made with specially calibrated thermistors 232 (Thermometrics Ultrastable Thermoprobes, - 10 K$\Omega$, ±0.02 stability per year) and the cells 200 were calibrated during each measurement cycle using a resistive heating element 234 (Digi-key ±1% accuracy 5x20$\Omega$ metal film resistor chains, thermal stability better than 100ppm/°C). Connections 236 to these components 234 (as well as to other components such as further thermistors 232 and reference electrodes 237 with a reference connection 235 which were included in special cells) were made through the top Kel F plugs 238 which also contained a filling tube 240 and a gas vent 240. The plugs 238 were further sealed to the cell 200 using Parafilm.

The cell 200 was maintained in specially constructed water baths stirred with Techne Tempunit TU-16A stirrer/regulators. Two or three water baths, each containing up to five Dewar cells 200, have been maintained so that 8 to 15 cells may be run simultaneously. The results presented in this section are based on approximately 54 total experiments and approximately 360 cell calibrations. It was found that the bath temperature at depths greater than 0.5 cm below the surface of the water bath could be maintained to better than ±0.01° of the set temperature (which was in the vicinity of 303.15°K) provided the water surface was allowed to evaporate freely. This constant temperature was maintained throughout the bath volume. The level in each water bath was maintained constant by means of a continuous feed using a dosimeter pump connected to a second thermostatted water bath.

The minimum current used in all the experiments reported here was 200 mA and it was found that the cells could be used at currents up to 800 mA with 0.1M LiOD as electrolyte. With 0.1M LiOD + 0.5M $Li_2SO_4$ or 1M $Li_2SO_4$ electrolytes currents as high as 1600 mA could be used in view of the lower joule heating in these solutions.

The mixing history within the calorimeters for these current limits was determined using dye injection combined with video recording; radial mixing was found to be extremely rapid (time scale < 3s) while axial mixing took place on an approximate 20s time scale at the lowest currents used. As the thermal relaxation time of the calorimeters was approximately 1600s, the calorimeters can be considered to be well stirred tanks. In view of the high degree of mixing and the axially uniform injection of heat, the maximum variation in temperature within the calorimeters was found to be 0.01° except for the region in contact with the bottom Kel F spacers where the variation reached 0.02°. These temperature distributions were determined using cells which contained 5 thermistors which could be displaced in the radial and axial directions.

All measurements reported here were made galvanostatically using HiTek Instruments Model DT2101 potentiostats connected as galvanostats. The feedback arrangement used, Figure III-2A, ensured total protection against oscillations. The galvanostat outputs were further monitored regularly to check for oscillations (none found throughout this work) and ripple content (60 and 120 Hz < 0.04% of the D.C. currents). Measurements above 800 mA were carried out using the circuit shown in Figure III-2B; this ensured that the high degree of stabilization achievable by means of the galvanostat could be extended to much higher current levels. (Measurements at current levels up to 25000 mA and using other forms of calorimeters have also been performed.) Electrodes were charged at 64mA cm$^{-2}$ for times in excess of 5 diffusional relaxation times. Other current densities were then applied, as indicated in the reported results. Data reported here were taken after a period in excess of a further 5 diffusional relaxation times.

Heat transfer coefficients were determined daily (and for special experiments every 9 hours) using galvanostats to drive the resistive heating elements. The measurement scheme adopted was as follows: the cell electrolyte volumes were replenished every 12, 24 or 48 hours for experiments using currents in the range 800-1600, 400-800, and 200-400 mA respectively to a set mark and the cell temperatures were allowed to equilibrate for 3 hours (>6 thermal relaxation times); joule heating was then applied for 3 hours using the resistive heaters, the input current from the galvanostats being adjusted so that the final temperature rise over the sloping baseline was about 2°. The cell temperature, cell voltages, bath temperatures and, when appropriate, the heater voltages, were monitored every 5 minutes using Keithley Model 199 DMM multiplexers to input data to Compaq Deskpro 386 16 MHz computers. Examples of such measurements for two different experiments at three different times are shown in Figures III-3A-C and III-4A-C. The measuring circuits were maintained open except during the actual sampling periods (voltage measurements were allowed to stabilize for 2 seconds before sampling; thermistor resistances were allowed to stabilize for 8 seconds before sampling). Data were displayed in real time as well as being written to discs. Variations from these procedures for special experiments are given below.

Experiments at low and intermediate current densities were carried out using 10 cm long electrodes; for the highest current densities the electrode lengths were reduced to 1.25 cm and the spacing of the anode winding was reduced to ensure uniform current distributions; such shorter electrodes were placed at the bottom of the Dewars so as to ensure adequate stirring.

Experiments were carried out using $D_2O$ (Cambridge Isotopes) of 99.9% isotopic purity. 0.1 M LiOD was prepared by adding Li metal (A.D. Mackay, $^6Li/^7Li$ = 1/9 ) to $D_2O$; 0.1 M LiOD + 0.5 M $Li_2SO_4$ and 1 M $Li_2SO_4$ were prepared by adding dried $Li_2SO_4$ (Aldrich 99.99%, anhydrous, $^6Li/^7Li$ = 1/11) to 0.1M LiOD and $D_2O$ respectively. The light water contents of the cells were monitored by NMR and never rose above 0.5%. Samples withdrawn for HDO and tritium analyses were made up using the appropriate electrolytes. A single batch of electrolyte was used for any given experimental series. Normal losses due to electrolysis (and evaporation at high cell temperatures) were made up by adding $D_2O$.

The current efficiencies for the electrolyses according to reaction (i) were determined by measuring the combined rates of gas evolution from the cells. Surprisingly, these efficiencies were higher than 99% as was also shown by the record of $D_2O$ additions. Such high current efficiencies have now also been reported in other work[11]. The high values can be understood in terms of the inhibition of $DF_2$ oxidation at the anode by Pt-oxide formation and by the extensive degassing of the oxygen content of the electrolyte in the cathode region by the $D_2$ evolution. These high current efficiencies greatly simplify the analyses of the experimental data by a "Black Box" model which is briefly described below.

"BLACK BOX" Models of the Calorimeter

In common with all other physicochemical and engineering devices, the evaluation of data from the behavior of the Dewar-type electrochemical calorimeters requires the construction of accurate "black box" models. A preferred method of data analysis is based on the fitting of the model to the experimental data using non-linear regression analysis.

Calorimetry for the model should preferably be based on a suitable set of blanks, on a suitably designed and sealed cell, carefully planned data analysis including non-linear regression techniques. The model should carefully consider all heat transfer components, including: electric enthalpy input, calibration heat input, heat input due to replenishing electrolyte loss by electrolysis and evaporation, heat flow from the cell by radiation and conduction, heat transfer from the cell due to latent heat of evaporation of $D_2O$, heat loss due to enthalpy carried off in the gas stream (for example, $D_2$, $O_2$ and $D_2O$), heat generated due to recombination of $D_2$ and $O_2$ (if any), and any excess heat generated in the cell. Further, there should be consideration of the time dependant temperature change in the cell due to the change of the contents of the cell. Prime consideration should also be given to careful thermostatting of the external bath and atmosphere temperature. Careful choices should also be made of instrumentation and temperature measuring devices, such as thermistors, heater components, ohm meters, volt meters, bath circulators, potentiostats, multiplexers and data processing equipment.

## Results

### Excess Enthalpy Using Pd-Rod Electrodes in D₂O Solutions

A summary of the results obtained using 0.1, 0.2 and 0.4 cm diameter rod electrodes is given in Table III-3 while the relevant results for other experiments are summarized in Table III-A6.1.

Table A6.1.   Excess enthalpy observed for 0.1, 0.2, and 0.4cm diameter palladium rods as a function of current density.

| Electrode Dimensions Diameter x Length /cm | Batch[a] & Electrolyte[b] | Current[c] Density /mA cm⁻² | $E_{cell}$ /V | $Q_{input}$ /W | $Q_{output}$ /W | $Q_{excess}$ /W | Specific $Q_{excess}$ /W cm⁻³ [d] | $Q_{excess}/Q$ of Breakeven [e] |
|---|---|---|---|---|---|---|---|---|
| 0.1x10 | 1 D ○ | 8(25) | 2.754 | 0.0304 | 0.0379 | 0.0075 | 0.095 | 25(23) | 11(12) |
| 0.1x10 | 1 D ○ | 64(200) | 3.602 | 0.412 | 0.481 | 0.079 | 1.01 | 19 | 11 |
| 0.1x1.25 | 1 D ○ | 512(200) | 8.995 | 1.491 | 1.573 | 0.082 | 8.33 | 5 | 4(5) |
| 0.2x10 | 1 D □ | 8(50) | 2.702 | 0.058 | 0.094 | 0.036 | 0.115 | 62 | 27 |
| 0.2x10 | 1 D □ | 64(400) | 4.231 | 1.07 | 1.57 | 0.493 | 1.57 | 46 | 29 |
| 0.2x1.25 | 1 D □ | 512(400) | 8.461 | 2.77 | 3.15 | 0.378 | 9.61 | 14 | 11 |
| 0.4x10 | 1 D △ | 8(100) | 2.910 | 0.137 | 0.290 | 0.153 | 0.122 | 112(111) | 53 |
| 0.4x10 | 1 D △ | 64(800) | 4.860 | 2.66 | 4.41 | 1.75 | 1.39 | 66 | 65 |
| 0.4x1.25 | 1 D △ | 512(800) | 8.655 | 5.69 | 9.04 | 3.35 | 21.4 | 59 | 48 |

(a) All rods were from Batch 1.
(b) D: 0.1M LiOD; All measurements were made in the same batch of D₂O of 99.9% isotopic purity.
(c) Values in parentheses: actual applied currents.
(d) Excess heating expressed as a percentage of the enthalpy input to the cell.
(e) Excess heating expressed as a percentage of the energy input to the cell. The values in parentheses in columns (d) and (e) were given in Table 2 of reference (1).

23

Table III-3 lists the times elapsed from the start of any particular experiment, the current density, the cell voltage, the enthalpy input, the excess enthalpy $Q_f$, and the excess enthalpy per unit volume. The derived values in the Table were obtained by both the approximate method of data analysis and by an exact fitting procedure using a "black box" design of the type briefly described herein; error estimates are confined to the data derived by the latter method. Data are given for the three electrolytes used and the batch numbers of the particular electrodes are indicated. The measurements were made, as far as possible, when a steady state of excess enthalpy generation had been reached. However, this was not possible for some electrodes at the highest current densities used because the cells were frequently driven to the boiling point. The values given for these cases apply to the times just prior to the rapid increases in cell temperature (see section on Enthalpy Bursts).

Table III-3. Excess enthalpy observed for 0.1, 0.2, and 0.4 cm diameter palladium rods as a function of current density, time elapsed since start of experiment, electrolyte composition, and electrode batch.

| Rod Dia. /cm | Batch[a] & Electrolyte[b] | Current Density /mA cm$^{-2}$ | Time /s/10$^{-6}$ | $E_{cell}$ /V | $Q_{input}$ /W | $Q_{excess}$ /W | Approximate Specific $Q_{excess}$ /W cm$^{-3}$ | Specific $Q_{excess}$ From Regression Analysis /W cm$^{-3}$ |
|---|---|---|---|---|---|---|---|---|
| 0.1 | 3 𝒴 ◑ | 64 | 6.86 | 2.811 | 0.032 | 0.001 | 0.140 | 0.1442 ±0.0002 |
| 0.1 | 2 𝒟 Q | 128 | 3.88 | 4.000 | 0.984 | 0.160 | 2.04 | 2.043 ±0.003 |
| 0.1 | 3 𝒴 ◑ | 128 | 7.72 | 3.325 | 0.089 | 0.005 | 0.486 | 0.5131 ±0.0006 |
| 0.1 | 2 𝒟 Q | 256 | 3.97 | 5.201 | 2.93 | 0.313 | 3.99 | 4.078 ±0.007 |
| 0.1 | 2 𝒟 Q | 512 | 4.06 | 6.085 | 7.27 | 1.05 | 13.4 | 13.77 ±0.02 |
| 0.1 | 3 𝒟 ○ | 1024 | 5.38 | 11.640 | 4.04 | 1.03 | 105. | 112.8 ±0.1 |
| 0.2 | 3 𝒴 ▯ | 64 | 0.51 | 4.780 | 1.30 | 0.006 | 0.019 | 0.021 ±0.001 |
| 0.2 | 3 𝑀 ▮ | 64 | 2.40 | 3.930 | 0.956 | 0.024 | 0.077 | 0.077 ±0.001 |
| 0.2 | 3 𝒟 ▯ | 128 | 2.50 | 8.438 | 5.52 | 1.65 | 5.25 | 5.68 ±0.01 |
| 0.2 | 3 𝒴 ▮ | 128 | 8.39 | 4.044 | 0.250 | 0.028 | 0.713 | 0.714 ±0.001 |
| 0.2 | 3 𝑀 ▮ | 256 | 4.92 | 6.032 | 0.898 | 0.056 | 1.42 | 1.498 ±0.002 |
| 0.2 | 3 𝑀 ▮ | 512 | 5.98 | 9.042 | 3.00 | 0.603 | 15.3 | 16.03 ±0.01 |
| 0.2 | 3 𝒴 ▮ | 1024 | 6.81 | 7.953 | 5.13 | 2.80 | 71.2 | 75.42 ±0.08 |
| 0.4 | 2 𝒟 △ | 64 | 1.70 | 5.419 | 3.10 | 0.263 | 0.209 | 0.214 ±0.003 |
| 0.4 | 2 𝒟 △ | 64 | 7.44 | 4.745 | 2.24 | 0.117 | 0.106 | 0.145 ±0.002 |
| 0.4 | 2 𝑀 △ | 64 | 9.57 | 3.519 | 0.198 | 0.0005 | 0.002 | 0.0023 ±0.0002 |
| 0.4 | 2 𝒟 △ | 128 | 5.92 | 6.852 | 8.50 | 1.05 | 0.84 | 0.842 ±0.009 |
| 0.4 | 2 𝒟 △ | 256 | 7.94 | 7.502 | 2.38 | 0.311 | 1.98 | 1.999 ±0.003 |
| 0.4 | 2 𝒟 △ | 512 | 8.12 | 10.580 | 7.23 | 1.65 | 10.5 | 11.09 ±0.02 |

(a) All rod lengths 10cm or *1.25cm or **8.75cm

(b) $\mathcal{D}$: 0.1M LiOD; $\mathcal{Y}$: 0.50M Li2SO4; $M$: 0.1M LiOD + 0.45M Li2SO4. All measurements were made in the same batch of D$_2$O of 99.9% isotopic purity. All measurements in $\mathcal{Y}$ or $M$ have been made since March, 1989.

24

The values of the rates of excess enthalpy generation listed in Table III-3 are lower limits because both the method of calculation and the neglect of the latent heat of evaporation lead to an underestimate of $Q_f$. There is a further factor which leads to an additional underestimate of $Q_f$: the dissolution of D in the electrodes is exothermic and consequently the sloping base line causes a decrease in the solubility with time and therefore an absorption of heat. This factor is difficult to quantify since the deuterium content of the lattice will not be in equilibrium at any given cell temperature. We have therefore neglected all factors which would give small positive corrections to the derived values of the excess enthalpies. Of the three corrections listed above, that due to the systematic underestimate of the heat output from the cell is most significant.

**Blank Experiments**

Table III-4 lists the results of a variety of blank experiments: measurements with Pd electrodes in light water, with Pt-electrodes in light and heavy water and measurements with 0.8 cm diameter Pd electrodes in heavy water. It can be seen that most of these experiments give small negative values for the excess enthalpy. These negative values are expected for systems giving a thermal balance according to the electrolytic reaction (i) or the corresponding reaction for light water since both the method of calculation and the neglect of the enthalpy output from the cell due to evaporation lead to an underestimate of the heat flows from the cells.

Table III-4. Results for blank experiments on platinum and palladium rods as a function of current density, time elapsed since start of experiment, and electrolyte composition.

| Rod Dia. /cm | Batch[a] & Electrolyte[c] | Current Density /mA cm$^{-2}$ | Time /s/10$^{-5}$ | $E_{cell}$ /V | $Q_{input}$ /W | $Q_{excess}$ /W | Approximate Specific $Q_{excess}$ /W cm$^{-3}$ | Specific $Q_{excess}$ From Regression /W cm$^{-3}$ | |
|---|---|---|---|---|---|---|---|---|---|
| Palladium Electrodes:[a] | | | | | | | | | |
| 0.1 | 2 W | 32 | 11.32 | 3.605 | 0.212 | -0.001 | -0.009 | -0.0097 | ±0.0002 |
| 0.1 | 2 W | 64 | 0.92 | 3.873 | 0.479 | -0.001 | -0.014 | -0.0165 | ±0.0005 |
| 0.1 | 2 W | 128 | 3.04 | 5.186 | 1.482 | -0.001 | -0.001 | -0.001 | ±0.001 |
| 0.1 | 2 W | 256 | 3.96 | 8.894 | 5.931 | -0.001 | -0.007 | -0.008 | ±0.006 |
| 0.1 | 2 W | 512 | 5.40 | 11.29 | 15.70 | -0.001 | -0.008 | -0.01 | ±0.02 |
| b | D | 0.8 | 3.00 | 2.604 | 1.458 | -0.001 | -0.000 | -0.000 | ±0.001 |
| 0.8 | 1 D | 8 | 1.22 | 3.365 | 0.365 | -0.001 | -0.000 | -0.000 | ±0.003 |
| 0.8 | 2 D | 8 | 1.31 | 3.527 | 0.397 | -0.003 | -0.000 | -0.001 | ±0.004 |
| Platinum Electrodes:[a] | | | | | | | | | |
| 0.1 | D | 64 | 1.02 | 3.800 | 0.452 | 0.000 | 0.000 | -0.0007 | ±0.0004 |
| 0.1 | D | 64 | 2.06 | 4.138 | 0.520 | -0.001 | -0.008 | -0.0094 | ±0.0005 |
| 0.1 | D | 256 | 1.28 | 6.218 | 3.742 | -0.001 | -0.028 | -0.032 | ±0.004 |
| 0.1 | W | 64 | 3.01 | 4.602 | 0.624 | -0.002 | -0.023 | -0.0232 | ±0.0006 |
| 0.1 | W | 64 | 3.35 | 4.821 | 0.668 | -0.003 | -0.038 | -0.0392 | ±0.0006 |
| 0.1 | W | 512 | 10.25 | 12.02 | 16.86 | -0.001 | -0.007 | -0.01 | ±0.02 |

(a) All rod lengths 10cm.
(b) Palladium sheet electrode 8 x 8 x 0.2cm.
(c) $D$: 0.1M LiOD; $W$: 0.1M LiOH; All measurements in $D_2O$ were made in the same batch as that used in the experiments in Table 3.

Time Dependence of the Phenomena: "Bursts in Enthalpy"

Figures III-5A and B are examples of the temperature-time plots in experiments which show marked increases in the heat outputs while Figures III-6A and B give the derived rates of the specific excess enthalpy release. Figures III-7A and B give the time dependence of the total specific excess enthalpies for the corresponding sections of experimental data. A number of important conclusions follow from these time dependencies: in the first place, the rates of excess enthalpy generation increase slowly with time; secondly, bursts in the production of excess enthalpy are superimposed on the slowly increasing or steady state enthalpy generation and these bursts occur at unpredictable times and are of unpredictable duration; following such bursts the excess enthalpy production returns to a baseline value which can be higher than that just prior to the initiation of the burst; thirdly, we have found that cells are frequently driven to the boiling point, e.g., see Figure III-8. The rate of enthalpy production must become extremely large under these conditions since the dominant mode of heat transfer is now the latent heat of evaporation. It is not possible, however, at this stage to make a quantitative estimate of the heat output since the cells and instrumentation are unsuitable to make estimates under these conditions. It should also be noted that, although the cell potential initially decreases (in common to the situation for the bursts) there is usually a change to an increase of the potential with time when cells are driven to the boiling point probably due to the loss of electrolyte in spray leaving the cells.

The attainment of boiling may be due to a burst in enthalpy production or to an increase in the baseline output. Because of a policy of discontinuing the experiments (or, at least, of reducing the current density) when the boiling point is reached has been adopted, these cannot yet be distinguished. The reasons for this are as follows: the dissolution of D in Pd is exothermic under these conditions; rapid increases of temperature must therefore be accompanied by a marked increase of the chemical potential (fugacity) of dissolved $D_+$ since chemical equilibrium cannot be established by the relatively slow diffusional relaxation processes. Such conditions should be avoided at the present stage of research since they could lead to uncontrollable energy releases. Attention is drawn to the fact that rapid increases of temperature are accompanied by marked increases in the rate of generation of tritium. Other aspects of the phenomenon of bursts are addressed in the Discussion Section below.

### DISCUSSION

The results for the excess enthalpy generation, Table III-3, show that very accurate values of the heat flows can be obtained by means of a simple calorimetric technique adopted. The reason for this high accuracy is the very large redundancy of the data set which consists of ~1000 measurements of a highly structured cell temperature-time profile plot which is used to determine four parameters of the "black box" model; the fifth parameter is determined separately from the measured cell voltage-time profile plot. This statement about the accuracy applies to the random errors but it is emphasized again that the method of calculation leads to a systematic underestimate which can, however, readily be corrected.

These statements about the accuracy are borne out by the blank experiments, Table III-4, which show that the calorimetric technique adopted gives satisfactory thermal balances for electrolysis according to reaction (i) or for

$$2H_2O \rightarrow 2H_2O + O_2 \qquad\qquad (iv)$$

for a wide range of conditions and systems. The experiments on the 0.8 cm diameter Pd electrodes in $D_2O$ are regarded as the most significant blanks. In common with numerous other investigations we have therefore also carried out experiments on the Pd/D system which give zero excess enthalpy. Excess enthalpy generation on 0.8cm diameter electrodes has now been achieved by using a recently obtained batch of electrode material. The marked excess enthalpy generation for experiments such as those listed in Table III-3 must be viewed in the light of these blank experiments. The specific excess enthalpy generation can reach rates as high as 100 watt $cm^{-3}$; this is a factor of approximately five (5) times higher than the highest value reported previously[1] and is comparable to the highest value achieved in a recent investigation using Seebeck calorimetry[10]. The values of the excess enthalpy listed in Table III-3 are also broadly in line with the results contained in a number of other reports (e.g. see[9]) for comparable experimental conditions.

It should be noted that the present data support the view that the "steady-state" enthalpy generation is due to a process or processes in the bulk of the electrodes although this statement does not now seem to be as clear cut as that made on the basis of the results contained in the inventors' preliminary publication.[1] The data presented here show in more detail that the rates of excess enthalpy production increase markedly with current density, Figure III-9, (the rate of increase is at least on the order $I^2$) so much so that the process has the appearance of a threshold phenomenon. Experiments of higher precision at low current densities are needed, however, to decide whether this is the case, and if so, what the threshold current density or potential might be. At the highest current densities there is no discernible systematic difference between the data for the different batches of electrodes and electrolytes used in these experiments. The scatter in the results is relatively small at these high current densities but this scatter becomes large at low to intermediate current density. It could well be that this scatter is due to differences in the electrode material and/or solution conditions but it could also be that the fugacity of the deuterons in the lattice is more sensitive to the precise surface conditions for measurements at low to intermediate current densities. The absence of excess enthalpy generation for 0.8 cm diameter electrodes drawn from Batch 1 certainly points to the importance of the metallurgical history of the specimens in determining $Q_f$. It is noted that most investigations reported to date have used relatively low current densities and that this may well account for some of the variability of the results. Furthermore the calorimetric techniques and methods of data evaluation adopted in many of these investigations would not allow the accurate measurement of low values of the excess enthalpy.

Statements as to the magnitudes of the total excess are clearly arbitrary since these depend on the duration of any particular experiment: measurements giving excesses of $\sim$50MJ cm$^{-3}$ have now been carried out. The total specific excess enthalpies in the enthalpy bursts are perhaps better defined quantities in this regard. Figures III-6B, III-7B and III-8B give the data for the largest burst observed to date and it is of interest that the total enthalpies in the bursts are also far above the values which can be attributed to any chemical reactions. Furthermore, for these bursts, the rates of enthalpy production are up to 17 times (plateau levels) and 40 times (peak values) the total enthalpy inputs to the cells. As pointed out previously[1] the use of energy efficient systems would allow the construction of effective heat generating systems even if the excess enthalpy generation were restricted to the baseline values of Table III-3.

### LITERATURE REFERENCES FOR SECTION III (Incorporated By Reference)

1. M. Fleischmann, S. Pons, and M. Hawkins, J. Electroanal Chem. 261 (1989) 301.

2. R.C. Kainthla, M. Skiarczyk, L. Kaba, G.H. Lin, O. Velev, N.J.C. Packham, J.C. Wass and J. O'M. Bockris, Inst. J. Hydrogen Energy, 14 (1989) 771.

3. M.L. Oliphant, P. Harteck, and Lord Rutherford, Nature 133 (1934) 413.

4. N.J.C. Packham, K.L. Wolf, J.C. Wass, R.C. Kainthla, and J. O'M. Bockris, J. Electroanal. Chem. 270 (1989) 451.

5. K.L. Wolf, N.J.C. Packham, D. Lawson, J. Shoemaker, F. Cheng, and J.C. Wass, Proceedings of the Workshop on Cold Fusion Phenomena, Santa Fe NM, 23-25 May, 1989 and submitted to Fusion Technology.

6. E. Storms and C. Talcott, Proceedings of the Workshop on Cold Fusion Phenomena, Santa Fe NM USA, 23-25 May (1989).

7. P.K. Iyengar, Fifth International Conference on Emerging Nuclear Energy Systems, Kae, West Germany, 3-6 July (1989).

8. M.S. Krishnan, S.K. Malhotra, D.G. Gaonkar, M. Srinivasan, S.K. Sikka, A. Shyam, V. Chitra, T.S. Iyengar and P.K. Iyengar, submitted to Fusion Technology.

M.G. Nayar, S.K. Mitra, P. Raghunathan, M.S. Kirshnan, S.K. Malhotra, D.G. Gaonkar, S.K. Sikka, A. Shyam and V. chitra, submitted to Fusion Technology.

T.P. Radhakrishnan, R. Sundaesan, S. Gangadharan, B.K. Sen and T.S. Murthy submitted to Fusion Technology.

G. Venkateswaran, P.N. Moorthy, K.S. Venkateswarlu, S.N. Guha, B. Yuvaraju, T. Datta, T.S. Iyengar, M.S. Panajkar, K.A. Rao and K. Kishore submitted to Fusion Technology.

T.S. Murthy, T.S. Iyengar, B.K. Sen and T.B. Joseph submitted to Fusion Technology.

S.K. Malhotra, M.S. Krishnan and H.K. Sadhukhan submitted to Fusion Technology.

R.K. Rout, M. Srinivasan and A. Shyam submitted to Fusion Technology.

9. R. Adzic and E. Yeager, Case Center for Electrochemical Science Annual Conference, 30-31 October (1989), Cleveland, OH and to be published.

10. R. A. Oriani, J. C. Nelson, S. K. Lee, and J. H. Broadhurst, 176th Meeting of the Electrochemical Society, Hollywood, FL USA October (1989), and submitted to Nature.

11. D. E. Williams, D. J. S. Findlay, D. H. Craston, M. R. Sené, M. Bailey, S. Croft, B. W. Hooten, C. P. Jones, A. R. J. Kucernak, J. A. Mason, and R. I. Taylor, Nature 342 (1989) 375.

### Claims

1. A heat-generating apparatus (10, 24, 32, 200) comprising:

    (i) a source (12, 34, 42) of isotopic hydrogen atoms;

    (ii) a lattice material (16, 28, 30, 32, 40, 43, 54, 212) having a crystal structure and being capable of dissolving isotopic hydrogen atoms such that the concentration of dissolved isotopic hydrogen atoms achieves a chemical potential which is at or above a predetermined chemical potential at or above which excess heat occurs, excess heat being defined as heat generation which is greater than the joule-heat equivalent used for dissolving isotopic hydrogen in the lattice material;

    (iii) a means (18, 20, 41, 44, 48, 49, 56, 218) for accumulating and compressing isotopic hydrogen atoms into said lattice material in a quantity which is above the predetermined chemical potential while maintaining integrity of the crystal structure; and

    (iv) a thermal conduit (48) for removing heat from said lattice material;

**2.** The apparatus according to claim 1, further comprising a container (14, 26) into which said source, lattice material and at least a portion of said accumulating and compressing means are disposed and/or further comprising a means for converting heat generated in said lattice to work.

**3.** The apparatus according to claim 1 or 2, wherein said accumulating and compressing means is characterized by means (18, 20, 41, 44, 48, 49) for applying an electric field across said lattice material and/or wherein said accumulating and compressing means comprises means (18, 20, 41, 44, 48, 49) for electrolytically decomposing said electrolyte into isotopic hydrogen which is accumulated and compressed onto and into said lattice material, in particular wherein said electrolyte decomposing means comprises anode means (18, 41, 48) and at least one charge generating source (20, 44).

**4.** The apparatus according to any of the preceding claims, wherein said lattice material comprises at least one metallic element (16, 40), preferably an element selected from group VIII and group IVA metals and alloys thereof.

**5.** The apparatus according to any of the preceding claims, wherein said lattice material is electrically conductive and said accumulating and compressing means comprises means (20) for connecting the lattice material as a cathode associated with said electrolyte decomposing means.

**6.** A heat-generation method comprising the steps of:

(i) providing a source (12, 34, 42) of isotopic hydrogen atoms;

(ii) providing a lattice material (16, 28, 30, 32, 40, 43, 54, 212) known to dissolve isotopic hydrogen atoms and having a crystal structure that is capable of being a host to high concentrations of isotopic hydrogen atoms compressed into the lattice material while maintaining integrity of the crystal structure;

(iii) contacting the lattice material with isotopic hydrogen atoms from said source;

(iv) supplying energy so as to produce a flow of isotopic hydrogen atoms from the source into the lattice material; and thereby

(v) compressing isotopic hydrogen atoms into the lattice material, during which compressing step the lattice material is capable of maintaining its structural integritiy until a predetermined condition is achieved at which excess heat is generated by interaction between isotopic hydrogen atoms and the lattice material, said predetermined condition being characterized by a chemical potential of the lattice material that is above a threshold level and excess heat being defined as evolved heat which is greater than the joule-heat equivalent used for dissolving isotopic hydrogen in the lattice material.

**7.** The method according to claim 6, wherein the surface preparing step is characterized by machining the surface following casting or annealing and/or wherein said contacting, supplying and compressing steps are characterized by charging said material lattice by electrolytic compression and/or wherein said charging step is characterized by performing a stepwise electrolytic charging of said lattice material.

**8.** The method according claim 6 or 7, wherein the steps (iv) and (v) are characterized by compressing isotopic hydrogen into said material lattice until the chemical potential above the chemical potential of a like lattice material equilibrated with said source at standard temperature and pressure is at least 0.5 eV.

**9.** The method according to any of the preceding claims, comprising the further step of preparing at least one surface of said lattice material for contact with isotopic hydrogen such that said surface comprises surface properties favorable to charging with atomic isotopic hydrogen, and/or further comprising the step of converting heat generated in said material into work and/or further comprising disposing the source and the lattice material in a container (14) and/or further comprising the step of poisoning the catalytic surface to prevent the reaction of isotopic hydrogen atoms bound to the surface with water to form isotopic hydrogen gas.

**10.** The method according to any of the preceding claims, wherein said lattice material comprises an electrically conductive lattice material.

**11.** The apparatus or method according to any of the preceding claims, wherein said lattice material is characterized by at least one element selected from palladium, iron, cobalt, nickel, ruthenium, rhodium, osmium, iridium, titanium, zirconium, hafnium, and alloys thereof, in particular wherein the lattice material comprises palladium or an alloy thereof.

12. The apparatus or method according to any of the preceding claims, wherein said source of isotopic hydrogen is a fluid source.

13. The apparatus or method according to any of the preceding claims, wherein said fluid source comprises an electrolyte.

14. The apparatus or method according to any of the preceding claims, wherein said electrolyte is lithium in dissolved form.

15. The apparatus or method according to any of the preceding claims, wherein said fluid source is an aqueous solution comprising at least one water-miscible isotopic hydrogen solvent component.

FIG.I-1A

FIG.I-1B

FIG.I-2

**FIG.I-3**

**FIG.I-4**

**FIG.I-5**

**FIG.I-6**

CHANNEL NUMBER

FIG.I-7

FIG.I-8

FIG.1-9

EP 0 698 893 A2

FIG.II-5

FIG.II-6

FIG.II-7

FIG.II-8

FIG.III-1

# FIG.III-2A

# FIG.III-2B

**FIG.III-3A**

**FIG.III-3AA**

**FIG.III-3B**

# FIG.III-3BB

CELL POTENTIAL/V

6.500
6.400
6.300
6.200
6.100
6.000

0    8640    17280    25920    34560    43200

TIME AFTER ADDITION/s

# FIG.III-3C

Δυ/°

41.000
38.000
35.000
32.000
29.000
26.000

0    8640    17280    25920    34560    43200

TIME AFTER ADDITION/s

# FIG.III-3CC

CELL POTENTIAL/V

7.000
6.900
6.800
6.700
6.600
6.500

0    8640    17280    25920    34560    43200

TIME AFTER ADDITION/s

# FIG.III-4A

# FIG.III-4AA

# FIG.III-4B

# FIG.III-4BB

# FIG.III-4C

# FIG.III-4CC

# FIG.III-5A

# FIG.III-5AA

# FIG. III-5B

# FIG. III-5BB

## FIG.III-6A

## FIG.III-6B

## FIG.III-7A

## FIG.III-7B

# FIG.III-8

# FIG.III-9